# EUROPEAN PATENT APPLICATION

(11) **EP 4 730 548 A1**
(43) Date of publication of application: **22.04.2026**
(21) Application number: 24880977.4
(22) Date of filing: 06.05.2024
(51) Int. Cl.: H01M 50/538

(54) **ELECTRODE ASSEMBLY, MANUFACTURING METHOD THEREFOR, BATTERY CELL, BATTERY AND ELECTRICAL DEVICE**

(30) Priority: 27.10.2023 CN 202311413781
(71) Applicant: Contemporary Amperex Technology Co., Limited, Ningde, Fujian 352100 (CN)
(72) Inventor: CHEN, Congsheng, Ningde, Fujian 352100 (CN); LIN, Wenfa, Ningde, Fujian 352100 (CN); HUANG, Biao, Ningde, Fujian 352100 (CN)
(74) Representative: Kraus & Lederer PartGmbB
(86) International application number: PCT/CN2024/091279
(87) International publication number: WO 2025/086598

(57) **Abstract**

An electrode assembly and a preparation method therefor, a battery cell, a battery, and an electrical apparatus are provided. The electrode assembly includes: an active material coating portion, and a tab portion including a plurality of tab sheets which are arranged in a laminated manner; the plurality of tab sheets are laminated to form an overlapping area and an offset area; the overlapping area is welded to form a first welding portion; and the offset area is at least welded at a position far away from the active material coating portion to form a second welding portion. In the technical solution provided by the embodiment of the present application, on one hand, the utilization rate of the tab portion is improved, the capacity of the battery cell is improved, and overcurrent temperature rise is reduced; and on the other hand, the second welding portion can play a role in supporting a welding pressure nozzle in comparison with the plurality of loose tab sheets, the problem of welding defects is reduced, the cutting requirements for the tab portion after welding are reduced, thereby saving the cost, and improving the quick charging performance and assembling efficiency of the battery cell; and moreover, the tab portion is not easily scratched by a hole wall of a through hole structure.

## Description

### CROSS-REFERENCE TO RELATED APPLICATIONS

The present application is filed based on and claims priority to the Chinese patent application with the application number 202311413781.2 and filed on October 27, 2023, which is incorporated herein by reference in its entirety.

### TECHNICAL FIELD

The present application relates to the field of batteries, and specifically relates to an electrode assembly and a preparation method therefor, a battery cell, a battery, and an electrical apparatus.

### BACKGROUND

With energy saving and emission reduction being the key to the sustainable development of the automobile industry, electric vehicles have become an important part of the sustainable development of automotive industry due to their advantages of energy saving and environmental protection. For electric vehicles, the battery technology is an important factor in development. The utilization rate of tab portion of electrode assemblies in related technologies is low, leading to a reduction in the capacity of battery cells.

### SUMMARY

In view of above problems, the present application provides an electrode assembly and a preparation method therefor, a battery cell, a battery, and an electrical apparatus, aiming to improve the utilization rate of a tab portion of the electrode assembly and improve the capacity of the battery cell.

In a first aspect, the present application provides an electrode assembly, which includes: an active material coating portion, and a tab portion connected to the active material coating portion; the tab portion includes a plurality of tab sheets which are arranged in a laminated manner; the plurality of tab sheets are laminated to form an overlapping area and an offset area; the overlapping area is welded to form a first welding portion; and the offset area is at least welded at a position far away from the active material coating portion to form a second welding portion.

In the technical solution provided by the embodiment of the present application, the overlapping area of the plurality of tab sheets is welded to form the first welding portion, and the offset area of the plurality of tab sheets is welded at a position far away from the active material coating portion to form the second welding portion, so that an area of welding areas of the plurality of tab sheets can be increased; on one hand, the utilization rate of the tab portion is improved, the capacity of the battery cell is improved, and overcurrent temperature rise is reduced; on the other hand, when the tab portion is welded with a terminal post, the second welding portion can play a role in supporting a welding pressure nozzle in comparison with the plurality of loose tab sheets, the problems of wrinkles and the like are avoided, the problem of a welding defect caused by press-fitting the welding pressure nozzle into loose areas of the plurality of tab sheets in the related technology is reduced, the cutting requirement of the welded tab portion is reduced and the cost is reduced; and moreover, the quick charging performance of the battery cell is improved. In addition, the offset area is welded to form the second welding portion, so that the efficiency of penetrating through a through hole structure by the tab portion can be improved, the assembling efficiency of the battery cell can be improved, and the tab portion is not easily scratched by a hole wall of the through hole structure.

In some embodiments, the first welding portion and the second welding portion are arranged in a connection manner. In the technical solution, compared with the plurality of loose tab sheets, because the first welding portion and the second welding portion are arranged in the connection manner, on one hand, the rigidity of the plurality of tab sheets after welding can be improved to a certain extent, the tab portion is not easily scratched by the hole wall of the through hole structure, and the efficiency of penetrating through the through hole structure by the tab portion can be improved; and on the other hand, the second welding portion formed after welding is not easy to collapse with pressure relative to the first welding portion, so that the welding pressure nozzle can be effectively supported, moreover, the problems of wrinkles and the like are avoided, and the problem of the welding defect caused by press-fitting the welding pressure nozzle into loose areas of the plurality of tab sheets in the related technology is reduced.

In some embodiments, in a width direction of the tab portion, the ratio of a width of the first welding portion to a width of the second welding portion ranges from 0.8 to 1.2; and/or, in the width direction of the tab portion, the ratio of the width of the first welding portion to the width of the tab portion ranges from 0.6 to 1; in a height direction of the tab portion, the ratio of a height of the second welding portion to the height of the first welding portion ranges from 0.08 to 0.2; and/or, in the height direction of the tab portion, the ratio of the height of the first welding portion to the height of the tab portion ranges from 0.45 to 0.65. In the above technical solution, the area of the welding areas of the plurality of tab sheets can be increased, the utilization rate of the tab portion is improved, the capacity of the battery cell is improved, the overcurrent temperature rise is reduced, and the problem of the welding defect caused by press-fitting the welding pressure nozzle into loose areas of the plurality of tab sheets in the related technology is reduced.

In some embodiments, in the height direction of the tab portion, the height of the second welding portion is 1-2 mm. In the above technical solution, because the height of the second welding portion is limited to meet the above conditions, on one hand, the proportion of the offset area of the plurality of tab sheets can be reduced as much as possible, the yield of the electrode assembly is improved and the quality of the battery cell is improved; and on the other hand, the offset area is welded on the basis of offsetting of the plurality of tab sheets, so that the area of welding areas of the plurality of tab sheets can be increased and the problem of the welding defect caused by press-fitting the welding pressure nozzle into loose areas of the plurality of tab sheets in the related technology is reduced.

In some embodiments, a thickness of the second welding portion gradually decreases along a direction far away from the first welding portion, so that cutting is facilitated.

In some embodiments, the second welding portion is provided with a first surface and a second surface which are oppositely arranged; and at least one of the first surface and the second surface is obliquely arranged relative to a height direction of the tab portion. In the above technical solution, the second welding portion is in above form, which is conducive to determining whether to cut subsequently according to the requirements, and facilitates the cutting.

In some embodiments, a maximum distance from the first surface to the second surface is 0.5-1 mm. In the above technical solution, because the maximum distance from the first surface to the second surface is limited to meet the above range, on one hand, it is conducive to determining whether to cut subsequently according to the requirements and facilitates the cutting; and on the other hand, the welding difficulty can be reduced, the welding defects are reduced and the welding quality is improved.

In some embodiments, the first surface extends along the height direction of the tab portion; the second surface is obliquely arranged relative to the height direction of the tab portion; and the distance from the first surface to the second surface gradually decreases along the direction far away from the first welding portion. In the above technical solution, because the second welding portion is in the above form, on one hand, on one hand, it is conducive to determining whether to cut subsequently according to the requirements and facilitates the cutting; and on the other hand, the welding difficulty can be reduced, the welding defects are reduced and the welding quality is improved.

In some embodiments, an included angle between the first surface and the second surface is 10°-45°. It facilitates to weld a part, far away from the active material coating portion, of the offset area by an ultrasonic seat and an ultrasonic welding head, and the welding convenience and the welding quality are improved.

In some embodiments, the first welding portion and the second welding portion are formed in an ultrasonic welding manner, which can improve the welding speed and the welding efficiency, and improve the surface quality after welding; and the welding process is clean, stable and reliable, and the energy consumption is low.

In some embodiments, the offset area is welded on at least one of two sides of the overlapping area to form a third welding portion. In the above technical solution, because the offset area is welded on at least one of two sides of the overlapping area to form the third welding portion, on one hand, the area of the welding areas of the plurality of tab sheets can be increased, the utilization rate of the tab portion is improved, the capacity of the battery cell is improved, and the overcurrent temperature rise is reduced; and on the other hand, the problem of the welding defect caused by press-fitting the welding pressure nozzle into loose areas of the plurality of tab sheets in the related technology is reduced, and the tab portion can conveniently penetrate a penetrating hole in the terminal post.

In a second aspect, the present application provides a battery cell, which includes: a case which is provided with a terminal post, and an electrode assembly which is arranged in the case; a tab portion is connected to the terminal post; and the electrode assembly is the electrode assembly in any embodiment above.

In technical solution provided by the embodiment of the present application, because the electrode assembly is adopted, on one hand, the utilization rate of the tab portion is improved, the capacity of the battery cell is improved, and the overcurrent temperature rise is reduced; and on the other hand, when the tab portion is welded with the terminal post, the second welding portion can play a role in supporting the welding pressure nozzle in comparison with the plurality of loose tab sheets, the problems of wrinkles and the like are avoided, the problem of the welding defect caused by press-fitting the welding pressure nozzle into loose areas of the plurality of tab sheets in the related technology is reduced, the use reliability of the battery cell is improved, and the cutting requirements for the tab portion after welding are reduced, thereby reducing the production difficulty of the battery cell, saving the cost, and improving the quick charging performance of the battery cell.

In some embodiments, the terminal post is provided with an accommodating portion, and at least part of the tab portion extends into the accommodating portion to be connected to the terminal post in a welding manner. On one hand, a hollow structure of the accommodating portion can reduce the weight of the terminal post to a certain extent so as to improve the weight energy density of the battery cell and the battery; and on the other hand, the tab portion can be accommodated in the accommodating portion, thus the assembling efficiency of the tab portion is improved, the space occupied by the tab portion can be saved, the space of the battery cell is fully utilized, the support and the terminal post as well as the support and the tab portion can fit tighter and more reliable, which makes the structure of the battery cell more compact, thus improving the energy density of the battery cell.

In some embodiments, the accommodating portion includes a first accommodating groove; a surface of the side, facing the active material coating portion, of the terminal post is a terminal post inner end surface; an opening of the first accommodating groove is formed in the terminal post inner end surface; and at least part of the tab portion is accommodated in the first accommodating groove. In the above technical solution, on one hand, the first accommodating groove is formed in the terminal post, which can reduce the weight of the terminal post to a certain extent, thereby improving the weight energy density of the battery cell and the battery; and on the other hand, the opening of the first accommodating groove is formed in the terminal post inner end surface, and the terminal post inner end surface is the surface of the side, close to the active material coating portion, of the terminal post, thus the first accommodating groove can be opened towards the active material coating portion, which facilitates the tab portion to extend into the first accommodating groove, thereby improving the assembling efficiency. Moreover, the first accommodating groove in this form is convenient to process, so the production efficiency is improved.

In some embodiments, the accommodating portion includes a second accommodating groove; a surface of the side, far away from the active material coating portion, of the terminal post is a terminal post outer end surface; an opening of the second accommodating groove is formed in the terminal post outer end surface; the second accommodating groove is in communication with the interior of the case through the penetrating hole; and the tab portion is arranged in the penetrating hole in a penetrating manner and is at least partially accommodated in the second accommodating groove. In the above technical solution, on one hand, the terminal post is provided with the second accommodating groove, which can reduce the weight of the terminal post to a certain extent, thereby improving the weight energy density of the battery cell and the battery; and on the other hand, the opening of the second accommodating groove is formed in the terminal post outer end surface, and the terminal post outer end surface is the surface of the side, far away from the active material coating portion, of the terminal post, thus the second accommodating groove can be opened towards the direction deviating from the active material coating portion, and when at least part of the tab portion is accommodated in the second accommodating groove, the tab portion can be easily accommodated and arranged through the opening of the second accommodating groove, and an electric connection operation and the like on the tab portion and the terminal post can be easily implemented through the opening of the second accommodating groove, thereby reducing the production difficulty of the battery cell, as well as improving the production efficiency of the battery cell.

In some embodiments, the case includes a case cover, and a case body with an opening; the case cover covers the opening; and the terminal post is arranged on the case cover and/or a wall body, opposite to the opening, of the case body. The terminal post is arranged on the case cover, and the size of the case cover is relatively small, so the size of a mold or a clamp can be reduced, which is conducive to reducing the cost; and the terminal post is arranged on the wall body, opposite to the opening, of the case body, the electrode assembly enters the case body along the opening, and the terminal post is directly opposite to the tab portion, so that the tab portion can be relatively easily connected to the terminal post, which improves the assembling efficiency of the battery cell.

In a third aspect, the present application provides a battery, which includes the battery cell in any embodiment above.

In the technical solution provided by the embodiment of the present application, the battery cell is adopted, which is conducive to improving the capacity of the battery, improving the use reliability of the battery, and reducing the production difficulty of the battery.

In a fourth aspect, the present application provides an electrical apparatus, which includes the battery in any embodiment above.

In the technical solution provided by the embodiment of the present application, the battery is adopted, which can improve the use reliability of the electrical apparatus.

In a fifth aspect, the present application provides a preparation method for an electrode assembly, which includes the following steps: providing a supplied material of the electrode assembly; laminating a plurality of tab sheets of the electrode assembly; welding an overlapping area of the plurality of tab sheets to form a first welding portion of a tab portion; welding an offset area of the plurality of tab sheets to form a second welding portion of the tab portion, the second welding portion being located at an end, far away from an active material coating portion, of the first welding portion.

In the technical solution provided by the embodiment of the present application, the overlapping area of the plurality of tab sheets is welded to form the first welding portion, and the offset area of the plurality of tab sheets is welded at the position far away from the active material coating portion to form the second welding portion, so that the area of the welding areas of the plurality of tab sheets can be increased; on one hand, the utilization rate of the tab portion is improved, the capacity of the battery cell is improved, and overcurrent temperature rise is reduced; on the other hand, when the tab portion is welded with the terminal post, the second welding portion can play a role in supporting the welding pressure nozzle in comparison with the plurality of loose tab sheets, the problem of the welding defect caused by press-fitting the welding pressure nozzle into loose areas of the plurality of tab sheets in the related technology is reduced, the cutting requirement of the welded tab portion is reduced and the cost is reduced; and moreover, the quick charging performance of the battery cell is improved.

In some embodiments, the welding the overlapping area of the plurality of tab sheets includes: clamping the overlapping area of the plurality of tab sheets between a first ultrasonic welding seat and a first ultrasonic welding head, and welding the overlapping area of the tab portion in an ultrasonic welding manner to form the first welding portion. In the above technical solution, the first welding portion is formed in the ultrasonic welding manner, which can improve the welding speed and the welding efficiency, and improve the surface quality of the overlapping area after welding; the welding process is clean, stable and reliable; and the energy consumption is low.

In some embodiments, the welding the offset area of the plurality of tab sheets includes: clamping the offset area of the plurality of tab sheets between a second ultrasonic welding seat and a second ultrasonic welding head, and welding the offset area of the tab portion in the ultrasonic welding manner to form the second welding portion. In the above technical solution, the second welding portion is formed in the ultrasonic welding manner, which can improve the welding speed and the welding efficiency, and improve the surface quality of the overlapping area after welding; the welding process is clean, stable and reliable; and the energy consumption is low.

In some embodiments, one of the surfaces, facing each other, of the second ultrasonic welding seat and the second ultrasonic welding head extends along the height of the tab portion, and the other one is obliquely arranged relative to the height direction of the tab portion. In the above technical solution, the offset area can be subjected to ultrasonic welding by the second ultrasonic welding seat and the second ultrasonic welding head to form the preset second welding portion, on one hand, it is conducive to determining whether to cut subsequently according to the requirements and facilitates the cutting; and on the other hand, the welding difficulty can be reduced, the welding defects are reduced and the welding quality is improved.

In some embodiments, an included angle between the surfaces, facing each other, of the second ultrasonic welding seat and the second ultrasonic welding head is smaller than an included angle between two oppositely arranged wall surfaces of the offset area. Through this arrangement, the second ultrasonic welding seat and the second ultrasonic welding head can clamp the part, far away from an active material coating portion, of the offset area, thereby improving the welding quality.

The above description is only an overview of the technical solution of the present application, and in order to be able to understand more clearly the technical means of the present application, it can be implemented in accordance with the contents of the description, and in order to make the above and other purposes, characteristics and advantages of the present application more obvious and easy to understand, the specific embodiments of the present application are listed below.

### BRIEF DESCRIPTION OF DRAWINGS

By reading the detailed description of the preferred embodiments below, various other advantages and benefits will become apparent to those of ordinary skill in the art. The drawings are used for the purpose of illustrating the preferred embodiments only and are not to be considered a limitation to the present application. Moreover, in all of the drawings, like reference numerals represent like components. In the drawings:
FIG. 1 is a structural schematic diagram of a vehicle provided by some embodiments of the present application;
FIG. 2 is an exploded structural diagram of a battery provided by some embodiments of the present application;
FIG. 3 is a three-dimensional diagram of a battery cell provided by some embodiments of the present application;
FIG. 4 is a structural section view of a battery cell provided by some embodiments of the present application;
FIG. 5 is a local amplification diagram of an electrode assembly provided by some embodiments of the present application;
FIG. 6 is a side view of an electrode assembly provided by some embodiments of the present application;
FIG. 7 is a local amplification diagram of an electrode assembly shown in FIG. 6;
FIG. 8 is a schematic structural diagram of a tab portion of an electrode assembly before pairing provided by some embodiments of the present application;
FIG. 9 is a schematic structural diagram of a tab portion of an electrode assembly after pairing, a first ultrasonic welding seat and a first ultrasonic welding head provided by some embodiments of the present application;
FIG. 10 is a schematic structural diagram of an overlapping area of a tab portion of an electrode assembly before welding, a first ultrasonic welding seat and a first ultrasonic welding head provided by some embodiments of the present application;
FIG. 11 is a schematic structural diagram of an electrode assembly provided by some embodiments of the present application, in which, an overlapping area of the tab portion forms a first welding portion by ultrasonic welding;
FIG. 12 is a schematic structural diagram of an offset area of a tab portion of an electrode assembly before welding, a second ultrasonic welding seat and a second ultrasonic welding head provided by some embodiments of the present application;
FIG. 13 is a schematic structural diagram of an electrode assembly provided by some embodiments of the present application, in which, an offset area, far away from an active material coating portion, of a tab portion forms a second welding portion by ultrasonic welding;
FIG. 14 is a schematic structural diagram of an electrode assembly provided by some embodiments of the present application;
FIG. 15 is a local amplification diagram of an electrode assembly provided by some other embodiments of the present application;
FIG. 16 is a top view of an electrode assembly provided by some other embodiments of the present application;
FIG. 17 is a schematic diagram of a cross section of a tab portion of an electrode assembly provided by yet some other embodiments of the present application;
FIG. 18 is a local sectional schematic diagram of a battery cell provided by some embodiments of the present application;

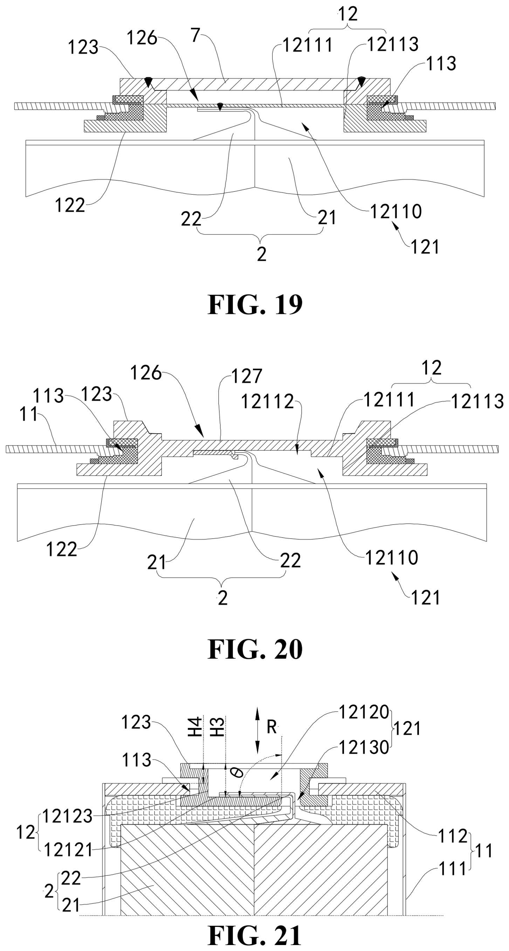

FIG. 19 is a local sectional schematic diagram of a battery cell provided by some embodiments of the present application;
FIG. 20 is a local sectional schematic diagram of a battery cell provided by some embodiments of the present application;
FIG. 21 is a local sectional schematic diagram of a battery cell provided by some embodiments of the present application;
FIG. 22 is a local sectional schematic diagram of a battery cell provided by some embodiments of the present application;
FIG. 23 is a local sectional schematic diagram of a battery cell provided by some embodiments of the present application;
FIG. 24 is a preparation flowchart of an electrode assembly provided by some embodiments of the present application.

Reference numerals:
electrical apparatus 1000; battery 100; controller 200; motor 300;
first direction Z; second direction X; third direction Y; axial direction R of terminal post;
battery cell 10; box body 20; first box 201; second box 202;
case 11; case body 111; opening 1110; case cover 112; mounting hole 113;
terminal post 12; accommodating portion 121; first accommodating groove 12110; first end wall 12111; first sunken groove 12112; first side wall 12113; second accommodating groove 12120; second end wall 12121; second sunken groove 12122; second side wall 12123; penetrating hole 12130; terminal post inner end surface 122; terminal post outer end surface 123; first groove 126; spacing portion 127; cover plate 13; first conducive member 131; second groove 1311; second conducive member 132;
electrode assembly 2; active material coating portion 21; tab portion 22; tab sheet 221; overlapping area Z1; offset area Z2; end offset area Z21; side offset area Z22; first welding portion 2211; second welding portion 2212; third welding portion 2213; first surface 2214; second surface 2215;
support 3; through hole 314; isolating member 4; explosion-proof valve 6; groove cover 7;
first ultrasonic welding seat 81; first ultrasonic welding head 82; second ultrasonic welding seat 91; and second ultrasonic welding head 92.

### DETAILED DESCRIPTION

Embodiments of the technical solutions of the present application will be described in detail below with reference to the accompanying drawings. The following embodiments are only used to more clearly illustrate the technical solutions of the present application, therefore only as examples, and cannot be used to limit the scope of protection of the present application.

Unless otherwise defined, all technical and scientific terms used herein have the same meanings as those commonly understood by those skilled in the art to which the present application pertains to. The terms used herein are for the purpose of describing specific embodiments only and are not intended to limit the present application. The terms "including" and "having" and any variations thereof in the specification and claims of the present application and the aforementioned BRIEF

### DESCRIPTION OF DRAWINGS are intended to cover non-exclusive inclusion.

In the description of the embodiments of the present application, the technical terms "first", "second", etc., are used only to distinguish between different objects and are not to be understood as indicating or implying a relative importance or implicitly specifying the number, particular order, or primary and secondary relationship of the technical features indicated. In the description of the embodiments of the present application, the meaning of "a plurality of" is two or more, unless otherwise explicitly and specifically defined.

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is simply a description of an association of associated objects, which indicates that there may exist three relationships, for example, A and/or B may represent three situations: A exists alone, both A and B exist, and B exists alone. Moreover, the character "/" herein generally indicates that the context objects are in an "or" relationship.

In the description of the embodiment of the present application, the term "a plurality of" refers to more than two (including two), similarly, "a plurality of groups" refers to two or more groups (including two groups), and "a plurality of members" refers to more than two members (including two members).

In the description of the embodiments of the present application, the technical terms "center", "length", "width", "thickness", "upper", "lower", "front", "rear", "left", "right", "vertical", "horizontal", "top", "bottom", "inner", "outer", "axial", "radial", "circumferential" and the like which indicate the orientation or positional relationship are based on the orientation or positional relationship shown in the accompanying drawing, and are only for the convenience of describing the embodiments of the present application and simplifying the description, and do not indicate or imply that the device or element referred to must have a specific orientation, be constructed and operated in a specific orientation, and therefore cannot be construed as a restriction on the embodiments of the present application.

In the description of the embodiments of the present application, unless otherwise expressly specified or limited, the technical terms "mounted", "linked", "connected", "fixed" and other terms shall be understood broadly, for example, they may be fixed, detachable, or integral, or mechanically or electrically connected, or directly linked, or indirectly linked through an intermediate medium, and may be communicated internally or interacted between two elements. For those of ordinary skill in the art, the specific meanings of the above terms in the embodiments of the present application can be understood according to specific situations.

At present, from the perspective of the development of the market situation, power batteries are increasingly more widely used. Power batteries are not only applied in energy storage power source systems such as water, fire, wind and solar power stations, but also widely applied in electric transport tools, such as electric bicycles, electric motorcycles, and electric vehicles, as well as many fields, such as military equipment and aerospace. With the continuous expansion of the application field of power batteries, the demand in the market is also constantly expanding.

In related technology, an electrode assembly of a battery cell includes multi-layer tab sheets which are arranged in a laminated manner, and the laminated multi-layer tab sheets are connected to form a tab portion in an ultrasonic welding manner, but due to the influence of processing, tolerance and the like, the laminated multi-layer tab sheets cannot be completely overlapped, resulting in an offset problem.

Generally, during assembling the battery cell, it is needed to make the tab portion penetrate through a through hole structure, and then weld the tab portion with a terminal post; the through hole structure can be a through hole structure on the terminal post, and also can be a through hole structure on a support between the terminal post and the electrode assembly; the offset tab portion is relatively loose, and is easy to interfere with a hole wall of the through hole structure in the process of penetrating through the through hole structure, which not only influences the assembling efficiency of the battery cell, and but also easily scratch the tab sheets; therefore, before the tab portion is welded with the terminal post, it is needed to cut the tab portion to cut off the offset part, and then press-fit a welding pressure nozzle to a welding position of the tab portion, otherwise, the welding pressure nozzle is press-fitted to a loose area of the tab portion, resulting in the problem of welding defects.

In addition, because it is needed to cut off the offset part before the tab portion is connected to the terminal post, the overall length of the tab portion will be reduced, and the utilization rate is reduced; and when the tab portion is welded with the terminal post, a small welding pressure nozzle is needed, a weld mark formed by welding the tab portion and the terminal post is relatively short, the overcurrent area is relatively small, and the overcurrent efficiency is relatively low, which influences the charging and discharging efficiency of the battery cell, resulting in decrease in the capacity of the battery cell.

Therefore, an embodiment of the present application provides an electrode assembly; an overlapping area of a plurality of tab sheets is welded to form a first welding portion, and an offset area of the plurality of tab sheets is welded at a position far away from an active material coating portion to form a second welding portion, so that the area of the welding areas of the plurality of tab sheets can be increased; on one hand, the utilization rate of the tab portion is improved, the capacity of the battery cell is improved, and overcurrent temperature rise is reduced; on the other hand, when the tab portion is welded with a terminal post, the second welding portion can play a role in supporting a welding pressure nozzle in comparison with the plurality of loose tab sheets, the problem of the welding defect caused by press-fitting the welding pressure nozzle into loose areas of the plurality of tab sheets in the related technology is reduced, the cutting requirement of the welded tab portion is reduced and the cost is reduced; and moreover, the quick charging performance of the battery cell is improved.

The electrode assembly disclosed by this embodiment of the present application is applied to the battery cell, and the battery cell can be used in an electrical apparatus using a battery as a power source or various energy storage systems using the battery as an energy storage element. The electrical apparatus can be but not limited to mobile phones, tablet computers, notebook computers, electric toys, electric tools, electric vehicles, electric automobiles, ships, spacecraft and the like. The electric toys can include a fixed or mobile electric toy, such as a game machine, an electric automobile toy, an electric ship toy and an electric aircraft toy, and the spacecraft can include an aircraft, a rocket, a space shuttle, a spacecraft and the like.

The following embodiments, for the convenience of illustration, take a vehicle being an electrical apparatus 1000 in one embodiment of the present application as an example to illustrate.

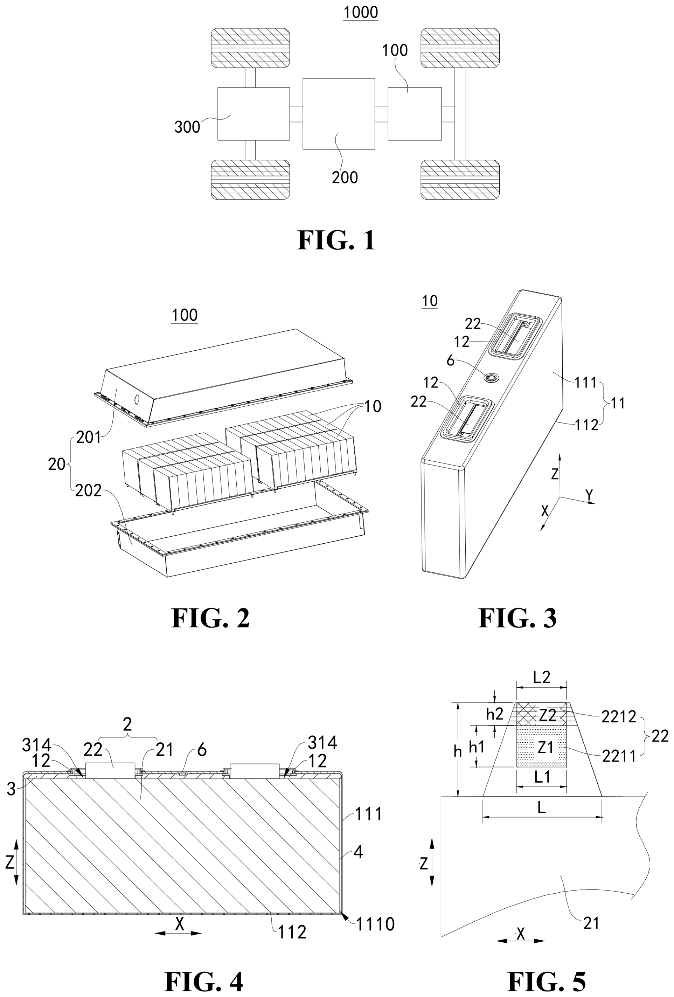

With reference to FIG. 1, FIG. 1 is a schematic structural diagram of a vehicle provided by some embodiments of the present application. The vehicle may be a fuel vehicle, a gas vehicle or a new energy vehicle, and the new energy vehicle may be a pure electric vehicle, a hybrid electric vehicle or an extended-range vehicle and the like. A battery 100 is arranged in the vehicle, and the battery 100 can be arranged at the bottom or head or tail of the vehicle. The battery 100 may be used for supplying power to the vehicle, for example, the battery 100 may serve as an operation power source of the vehicle. The vehicle can further include a controller 200 and a motor 300, and the controller 200 is configured to control the battery 100 to supply power to the motor 300, for example, the controller 200 is configured to meet the working power consumption requirements of the vehicle in starting, navigation and driving.

In some embodiments of the present application, the battery 100 can be used as an operation power supply of the vehicle, can also be used as a driving power supply of the vehicle, and replaces or partially replaces fuel oil or natural gas to provide driving power for the vehicle.

Referring to FIG. 2, FIG. 2 is an exploded diagram of a battery 100 according to some embodiments of the present application. The battery 100 includes a box 20 and a battery cell 10; and the battery cell 10 is accommodated within the box 20. The box body 20 is used for providing an accommodating space for the battery cell 10, and the box body 20 can be of various structures. In some embodiments, a box body 20 may include a first box 201 and a second box 202 which are mutually covered and jointly define an accommodating space used for accommodating a battery cell 10. The second box 202 can be of a hollow structure with an opening 1110 in one end; the first box 201 can be of a plate-shaped structure, and covers the open side of the second box 202, so that the first box 201 and the second box 202 jointly define the accommodating space; each of the first box 201 and the second box 202 can also be of a hollow structure with one side opened; and the open side of the first box 201 covers the open side of the second box 202. Definitely, the box body 20 formed by the first box 201 and the second box 202 can be in various shapes, such as a cylinder and a cuboid.

In the battery 100, there may be a plurality of battery cells 10 which can be connected in series or in parallel or in series-parallel, and the series-parallel connection refers to that the plurality of battery cells 10 are connected in series and in parallel. The plurality of battery cells 10 can be directly connected in series or in parallel or in series-parallel connection, and then the whole body formed by the plurality of battery cells 10 is accommodated in the box body 20; definitely, the battery 100 can also be in a form of a battery 100 module formed by connecting the plurality of battery cells 10 in series or in parallel or in series-parallel connection; and a plurality of batteries 100 modules are connected in series or in parallel or in series-parallel connection as a whole and are accommodated in the box body 20. The battery 100 can also include other structures, for example, the battery 100 can also include a bus part for realizing electric welding among the plurality of battery cells 10.

Each battery cell 10 may be a secondary battery or a primary battery; and may also be a lithium-sulfur battery, a sodium-ion battery, or a magnesium-ion battery, but is not limited thereto. The battery cell 10 can be in a cylinder shape, a flat body shape, a cuboid shape or other shapes.

With reference to FIG. 3 and FIG. 4, FIG. 3 is a three-dimensional diagram of a battery cell 10 provided by some embodiments of the present application; and FIG. 4 is a structural section view of a battery cell 10 provided by some embodiments of the present application. The battery cell 10 refers to a minimum unit forming the battery 100. As shown in FIG. 3 and FIG. 4, the battery cell 10 includes a case 11 and an electrode assembly 2; and the case 11 includes a case cover 112 and a case body 111.

The case body 111 is provided with the opening 1110, and the case cover 112 refers to a component which covers the opening 1110 to isolate an internal environment of the battery cell 10 from an external environment. Unlimitedly, the case body 112 has the shape fitting the case body 111 so as to be matched with the case body 111. Optionally, the case cover 112 can be made of a material (such as aluminum alloy) with certain hardness and strength, so that the case cover 112 is not easy to deform when being extruded and collided, the battery cell 10 can have higher structural strength, and the safety performance can be improved. The case cover 112 may be provided with functional components such as an electrode terminal. The electrode terminal can be electrically connected to the electrode assembly 2 to output or input electric energy of the battery cell 10. In some optional embodiments, a pressure relief mechanism configured to relieve the internal pressure when the internal pressure or temperature of the battery cell 10 reaches a threshold can be further arranged on the case cover 112. There may be many kinds of materials of the case cover 112, such as copper, iron, aluminum, stainless steel, aluminum alloy, and plastic, which is not specifically limited in the embodiment of the present application. In some embodiments, an insulating member also can be arranged at the inner side of the case cover 112, and the insulating member can be configured to isolate an electric connection part in the case body 111 from the case cover 112, so that the risk of short circuit is reduced. Exemplarily, the insulating member can be made of plastic, rubber and the like.

The case body 111 is an assembly matched with the case cover 112 to form the internal environment of the battery cell 10, in which, the formed internal environment can be used for accommodating the electrode assembly 2, an electrolyte solution and other components. The case body 111 and the case cover 112 can be independent components; the opening 1110 can be formed in the case body 111; and the case cover 112 covers the opening 1110 to form the internal environment of the battery cell 10. Unlimitedly, the case cover 112 and the case body 111 can also be integrated; specifically, the case cover 112 and the case body 111 can form a common connection surface before placing other components in the case; and when sealing the inner portion of the case body 111, the case cover 112 covers the case body 111. The case body 111 can be in various shapes and various sizes, such as a cuboid shape, a cylinder shape, and a hexagonal prism shape. Specifically, the shape of the case body 111 can be determined according to the specific shape and size of the electrode assembly 2. There may be many kinds of materials of the case body 111, such as copper, iron, aluminum, stainless steel, aluminum alloy, and plastic, which is not specifically limited in the embodiment of the present application.

The case body 111 may internally include one or more electrode assemblies 2. The electrode assembly 2 is component subjected to electrochemical reaction in the battery cell 10, and the electrode assembly 2 includes an active material coating portion 21, and a tab portion 22 connected to the active material coating portion 21. The electrode assembly 2 is mainly formed by winding or laminating a positive electrode plate and a negative electrode plate, and a diaphragm is usually arranged between the positive electrode plate and the negative electrode plate. The parts, with active materials, of a positive electrode plate and a negative electrode plate form the active material coating portion 21 of the electrode assembly 2; and the parts, without the active materials, of the positive electrode plate and the negative electrode plate respectively form the tab portions 22. In the charging and discharging process of the battery 100, a positive electrode active material and a negative electrode active material react with the electrolyte solution, and the tab portion 22 is connected to an electrode terminal to form a current loop.

The electrode assembly 2 is a component that can generate an electrochemical reaction in the battery cell 10. The case 11 may internally include one or more electrode assemblies 2. The electrode assembly 2 includes the active material coating portion 21, and the tab portion 22 connected to the active material coating portion 21. Specifically, the electrode assembly 2 is mainly formed by winding or laminating the positive electrode plate, a separator and the negative electrode plate. The parts, with active materials, of a positive electrode plate and a negative electrode plate form the active material coating portion 21 of the electrode assembly 2; and the parts, without the active materials, of the positive electrode plate and the negative electrode plate respectively form the tab portions 22. A positive electrode tab portion and a negative electrode tab portion can be jointly located at one end of the active material coating portion 21 or respectively positioned at two ends of the active material coating portion 21. In the charging and discharging process of the battery 100, the positive electrode active material and the negative electrode active material react with the electrolyte solution, and the tab portion 22 is connected to the electrode terminal (such as the terminal post) to form the current loop.

As shown in FIG. 3 and FIG. 4, the battery cell 10 further includes a support 3, an insulating member 4 and an explosion-proof valve 6; the support 3 is arranged at one end of the active material coating portion 21, and a through hole 314 is formed in the support 3; and the tab portion 22 penetrates through the through hole 314 to be connected to the terminal post column 12. The insulating member 4 is connected to the support 3, and the insulating member 4 and the support 3 are wrapped in the circumferential direction of the electrode assembly 2 together. The insulating member 4 can be configured to isolate an electric connection component in the case 11 from the case 11 so as to reduce the risk of short circuit. Exemplarily, the insulating member 4 can be made of plastic, rubber and the like. The insulating member 4 and the support 3 can be connected in a bonding manner, can also be connected in a hot melting manner, definitely, and can also be connected in other manners. The explosion-proof valve 6 is arranged on the case 11 and is configured to relieve internal pressure when the internal pressure or temperature of the battery cell 10 reaches the threshold. The explosion-proof valve 6 can be arranged on the case cover 112, or arranged on any wall body of the case body 111.

According to some embodiments of the present application, with reference to FIG. 4 and FIG. 5, FIG. 5 is a local amplification diagram of an electrode assembly 2 provided by some embodiments of the present application. The tab portion 22 of the electrode assembly 2 includes a plurality of tab sheets 221 arranged in a laminated manner; due to the influence of factors such as a manufacturing mode and manufacturing tolerance, the plurality of laminated tab sheets 221 are difficult to align strictly and have an edge offset phenomenon, so that on a projection plane perpendicular to a thickness direction of the tab sheets 221, an area in which projections of the plurality of tab sheets 221 are completely overlapped is set as an overlapping area Z1, and an area in which the projections of the plurality of tab sheets 221 are not completely overlapped is set as an offset area Z2, namely, the plurality of tab sheets 221 have the overlapping area Z1 and the offset area Z2 after being laminated. The offset area Z2 is formed by that the electrode assembly 2 is formed by winding or laminating the positive electrode plate, the separator and the negative electrode plates, and in the winding or laminating process of the electrode assembly 2, the tab sheets 211 correspondingly arranged on each layer of positive electrode plate or negative electrode plate cannot be completely aligned due to a production error.

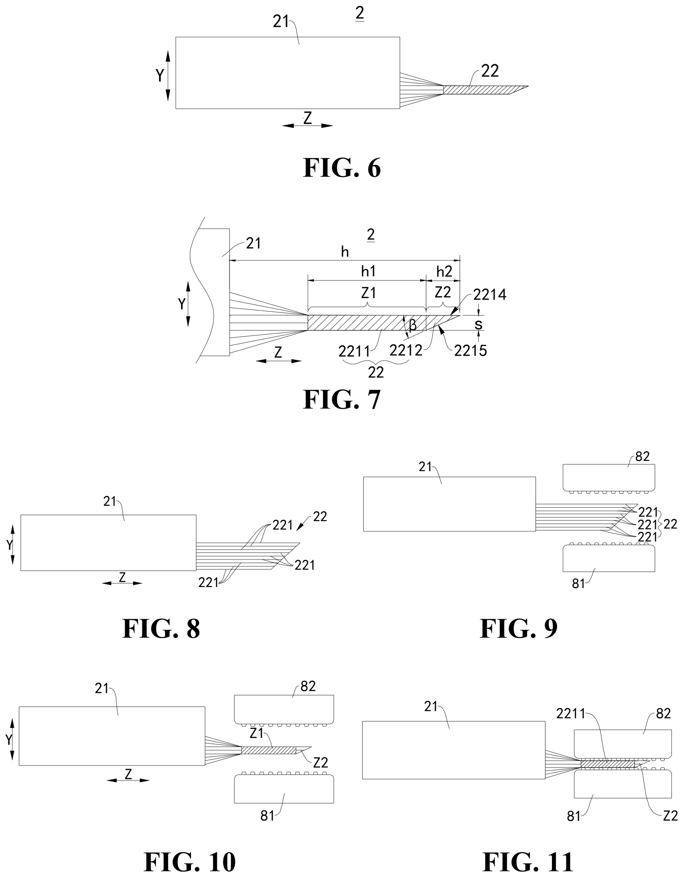

With reference to FIG. 6 and FIG. 7, FIG. 6 is a side view of an electrode assembly 2 provided by some embodiments of the present application; and FIG. 7 is a local amplification diagram of an electrode assembly 2 shown in FIG. 6. The overlapping area Z1 is welded to form a first welding portion 2211, thus the plurality of tab sheets 221 are welded together at the position of the overlapping area Z1; and the offset area Z2 is welded at least at a position far away from the active material coating portion 21 to form a second welding portion 2212, thus the plurality of tab sheets 221 are welded together at the position, far away from the active material coating portion 21, of the offset area Z2.

As shown in FIG. 5 to FIG. 7, a Z direction in FIG. 5 is a height direction of the tab portion 22 of the electrode assembly 2, an X direction is a width direction of the tab portion 22 of the electrode assembly 2, and a Y direction in FIG. 6 and FIG. 7 is a thickness directions of the tab portion 22 of the electrode assembly 2.

Generally, before the tab portion 22 is welded with the terminal post 12, it is needed to cut off the tab portion 22, and then press-fit the welding pressure nozzle to the welding position of the tab portion 22, otherwise, the welding pressure nozzle is press-fit to a loose area of the tab portion 22 to cause the problem of welding defects, and the loose tab portion 22 is not easy to penetrate through the through hole structure, which influences the assembling efficiency of the battery cell 10 and is easy to scratch the battery cell 10.

In the present application, the second welding portion 2212 is formed by welding at a position, far away from the active material coating portion 21, of the offset area Z2 of the plurality of tab sheets 221; before the tab portion 22 is welded with the terminal post 12, the second welding portion 2212 can be partially cut or not cut according to requirements; the second welding portion 2212 formed by welding at the offset area Z2 has certain rigidity relative to the loose multi-layer tab sheets 221, so the second welding portion 2212 can also support the welding pressure nozzle, which improves the stability of the welding pressure nozzle, further improves the welding quality of the tab portion 22 and the terminal post 12, improves the area of a weldable area of the tab portion 22 and the terminal post 12, ensures the overflowing area, thereby ensuring the quick charging performance of the battery cell 10.

In the technical solution provided by the embodiment of the present application, the first welding portion 2211 is formed by welding the overlapping area Z1 of the plurality of tab sheets 221, the second welding portion 2212 is formed by welding at the position, far away from the active material coating portion 21, of the offset area Z2 of the plurality of tab sheets 221, and thus the area of the welding areas of the plurality of tab sheets 221 can be expanded; on one hand, the utilization ratio of the tab portion 22 is improved, the capacity of the battery cell 10 is favorably improved, and the overcurrent temperature rise is reduced; and on the other hand, when the tab portion 22 is welded with the terminal post 12, the second welding portion 2212 can play a role of supporting the welding press nozzle compared with the plurality of loose tab sheets, the problems of wrinkles and the like are prevented, the problem of the welding defect caused by press-fitting the welding pressure nozzle into loose areas of the plurality of tab sheets 221 in the related technology is reduced, the cutting requirement of the tab portion 22 after welding is reduced, the cost is reduced, and meanwhile, the quick charging performance of the battery cell 10 is improved.

Moreover, the second welding portion 2212 is formed by welding at the offset area Z2, thus the efficiency of penetrating through the through hole structure by the tab portion 22 can be improved, the assembling efficiency of the battery cell 10 can be improved, and the tab portion 22 is difficult to scratch by a hole wall of the through hole structure.

In some embodiments, the first welding portion 2211 and the second welding portion 2212 are arranged in a connection manner, namely, the junction of the first welding portion 2211 and the second welding portion 2212 is welded, so that the first welding portion 2211 and the second welding portion 2212 are connected together.

In the above technical solution, compared with the plurality of loose tab sheets 221, the first welding portion 2211 and the second welding portion 2212 are arranged in the connection manner, so that on one hand, the rigidity of the plurality of tab sheets 221 after welding can be improved to a certain extent, the tab portion 22 are not easily scratched by the hole wall of the through hole structure, and the efficiency of the penetrating through the through hole structure by tab portion 22 is improved; and on the other hand, the second welding portion 2212 formed after welding is not easy to collapse with pressure relative to the first welding portion 2211, the welding pressure nozzle can be effectively supported, the problems of wrinkles and the like are avoided, and the problem of the welding defect caused by press-fitting the welding pressure nozzle into loose areas of the plurality of tab sheets 221 in the related technology is reduced.

With reference to FIG. 5, in a width direction of the tab portion 22, the ratio of a width of the first welding portion 2211 to a width of the second welding portion 2212 ranges from 0.8 to 1.2. Specifically, the width direction of the tab portion 22 is perpendicular to the height direction of the tab portion 22, and a height direction of the tab portion 22 is parallel to a height direction of the active material coating portion 21. The width of the first welding portion 2211 is L1, the width of the second welding portion 2212 is L2, L1 and L2 can be equal, or, L1>L2, or, L1<L2. For example, L1/L2 can be 0.8, 0.9, 1, 1.1, 1.2, etc.

In the above technical solution, by limiting the range of ratio of the width of the first welding portion 2211 to the width of the second welding portion 2212, the area of the welding areas of the plurality of tab sheets 221 can be increased, the utilization rate of the tab portion 22 is improved, the capacity of the battery cell 10 is improved, the overcurrent temperature rise is reduced, and the problem of the welding defect caused by press-fitting the welding pressure nozzle into loose areas of the plurality of tab sheets 221 in the related technology is reduced.

In some embodiments, in the width direction of the tab portion 22, the ratio of the width of the first welding portion 2211 to the width of the tab portion 22 ranges from 0.6 to 1. Specifically, the width of the first welding portion 2211 is L1, and the width of the tab portion 22 is L, for example, L1/L can be 0.6, 0.7, 0.8, 0.9, 1, etc. In the above technical solution, by limiting the range of ratio of the width of the first welding portion 2211 to the width of the tab portion 22, the area of the welding areas of the plurality of tab sheets 221 can be increased, the utilization rate of the tab portion 22 is improved, the capacity of the battery cell 10 is improved, the overcurrent temperature rise is reduced, and the problem of the welding defect caused by press-fitting the welding pressure nozzle into loose areas of the plurality of tab sheets 221 in the related technology is reduced.

With reference to FIG. 6 and FIG. 7, in the height direction of the tab portion 22, the height ratio of the second welding portion 2212 to the first welding portion 2211 is 0.08-0.2.

Specifically, the height direction of the tab portion 22 is parallel to the height direction of the active material coating portion 21, a height of the first welding portion 2211 is h1, a height of the second welding portion 2212 is h2, for example, h2/h1 can be 0.08, 0.1, 0.15, 0.2, etc.

Due to the influence of factors such as a manufacturing mode and manufacturing tolerance, the multi-layer tab sheets 221 are difficult to align strictly after being laminated and have the edge offset phenomenon, and the height of the part with the edge non-aligned (offset) is generally small, so it is needed to strictly control the height of the offset area Z2 and the height of the overlapping area Z1 after the plurality of tab sheets 221 are laminated in the present invention, so as to make the height ratio range of the second welding portion 2212 and the first welding portion 2211 formed after welding meet the requirement.

In the above technical solution, by limiting the range of ratio of the height of the first welding portion 2211 to the height of the second welding portion 2212, the height of the first welding portion 2211 is as large as possible, and the height of the second welding portion 2212 is as small as possible, thus improving the utilization rate of the tab portion 22, and reducing the cutting area of the tab portion 22; when the tab portion 22 is welded with the terminal post 12, the stability of welding and press-fitting on the tab portion 22 can be improved; and moreover, the welding area of the tab portion 22 and the terminal post 12 can be increased, therefore, the welding reliability of the tab portion 22 and the terminal post 12 can be improved.

In some embodiments, in the height direction of the tab portion 22, the ratio of the height of the first welding portion 2211 to the tab portion 22 is 0.45-0.65. Specifically, the height of the first welding portion 2211 is h1, and the height of the tab portion 22 is h, for example, h1/h can be 0.45, 0.5, 0.55, 0.6, 0.65, etc.

In the above technical solution, by limiting the range of ratio of the height of the first welding portion 2211 to the height of the tab portion 22, the area of the first welding portion 2211 is increased, the utilization rate of the tab portion 22 can be improved, the cutting area of the tab portion 22 is reduced, the overcurrent temperature rise is reduced, and the charging and discharging efficiency of the battery cell 10 is improved, thereby improving the capacity of the battery cell 10.

With reference to FIG. 5 to FIG. 7, in the height direction of the tab portion 22, the height of the second welding portion 2212 is 1-2 mm. For example, the height h2 of the second welding portion 2212 can be 1 mm, 1.2 mm, 1.4 mm, 1.6 mm, 1.8 mm or 2 mm.

In the above technical solution, because the height of the second welding portion 2212 is limited to meet the above conditions, on one hand, the proportion of offset area Z2 of the plurality of tab sheets 221 can be reduced as much as possible, the cutting area of the tab portion 22 is reduced, the yield of the electrode assembly 2 is improved and the quality of the battery cell 10 is improved; and on the other hand, the offset area Z2 is welded on the basis of offsetting of the plurality of tab sheets 221, so that the area of welding area of the plurality of tab sheets 221 can be increased and the problem of the welding defect caused by press-fitting the welding pressure nozzle into loose areas of the plurality of tab sheets 221 in the related technology is reduced.

With reference to FIG. 7, due to the influence of factors such as a manufacturing mode and manufacturing tolerance, the multi-layer tab sheets 221 are laminated to form the overlapping area Z1 and the offset area Z2; the overlapping area Z1 is welded to form the first welding portion 2211; the offset area Z2 is welded to form the second welding portion 2212; the thickness of the second welding portion 2212 gradually decreases in a direction far away from the first welding portion 2211; this part can be cut off according to the requirements; and when it is needed to cut off, the thickness of the second welding portion 2212 gradually decreases, so the cutting is more convenient.

In some embodiments, the second welding portion 2212 is provided with a first surface 2214 and a second surface 2215 which can be oppositely arranged in the thickness direction of the tab portion 22; and at least one of the first surface 2214 and the second surface 2215 is obliquely arranged relative to the height direction of the tab portion 22.

For example, the surface of the first welding portion 2211 in the thickness direction can be flush with the first surface 2214 of the second welding portion 2212 in the thickness direction, and the second surface 2215 of the second welding portion 2212 in the thickness direction can be obliquely arranged relative to the surface of the second welding portion 2212 in the thickness direction, so that the thickness of the second welding portion 2212 gradually decreases in the direction far away from the first welding portion 2211.

For another example, the first surface 2214 and the second surface 2215 of the second welding portion 2212 in the thickness direction can extend from a direction far away from the first welding portion 2211 to a direction approaching each other, respectively, so that the thickness of the second welding portion 2212 gradually decreases along the direction far away from the first welding portion 2211.

In the above technical solution, the second welding portion 2212 is in the above form, which facilitates to determine whether to cut according to the requirements subsequently, thereby improving the cutting convenience.

With reference to FIG. 7, the maximum distance s from the first surface 2214 to the second surface 2215 is 0.5-1 mm, namely the maximum thickness of the second welding portion 2212 is 0.5-1 mm. For example, the maximum distance s from the first surface 2214 to the second surface 2215 is 0.5 mm, 0.6 mm, 0.8 mm, 1 mm and the like. In the above technical solution, the maximum distance from the first surface 2214 to the second surface 2215 is limited to meet the above range, so that on one hand, whether to cut can be conveniently determined according to the requirements subsequently, thereby improving the cutting convenience; and on the other hand, the welding difficulty can be reduced, the welding defects are reduced, and the welding quality is improved.

In some embodiments, the first surface 2214 extends along the height direction of the tab portion 22, the second surface 2215 is obliquely arranged relative to the height direction of the tab portion 22, and the distance from the first surface 2214 to the second surface 2215 gradually decreases along the direction far away from the first welding portion 2211. That is, the first surface 2214 of the second welding portion 2212 formed after welding can be flush with the first welding portion 2211; when the tab portion 22 is welded to the terminal post 12, a large welding pressure nozzle can be adopted, a part of the welding pressure nozzle can be pressed on the first welding portion 2211 and the other part of the welding pressure nozzle can be pressed on the second welding portion 2212, namely, the first welding portion 2211 and the second welding portion 2212 can support the welding pressure nozzle at the same time, therefore, the welding difficulty can be reduced, the problem of the welding defect caused by press-fitting the welding pressure nozzle into loose areas of the plurality of tab sheets in the related technology is reduced, the cutting requirement on the tab portion after welding is reduced, the cost is reduced, and meanwhile, the quick charging performance of the battery cell 10 is improved.

Therefore, in the above technical solution, the second welding portion 2212 is in the above form, so that on one hand, it facilitates to determine whether to cut according to the requirements subsequently, thereby improving the cutting convenience; and on the other hand, the welding difficulty can be reduced, the welding defects are reduced, and the welding quality is improved.

In some embodiments, an included angle β between the first surface 2214 and the second surface 2215 is 10°-45°. For example, the included angle β between the first surface 2214 and the second surface 2215 can be 10°, 15°, 20°, 25°, 30°, 35°, 40°, 45° and the like. The included angle between the first surface 2214 and the second surface 2215 is limited in the above range, so that the part, far away from the active material coating portion 21, of the offset Z2 is conveniently welded by an ultrasonic seat and an ultrasonic welding head, and the welding convenience and the welding quality are improved.

The tab sheets are metal sheets and are soft in texture, so the first surface 2214 and the second surface 2215 are not completely planes; due to wrinkles caused in the production or processing process, this angle is an approximate range, which does not influence the protection for other numerical values within an error range.

With reference to FIG. 8 to FIG. 11, FIG. 8 is a schematic structural diagram of a tab portion 22 of an electrode assembly 2 before pairing provided by some embodiments of the present application; FIG. 9 is a schematic structural diagram of a tab portion 22 of an electrode assembly 2 after pairing, a first ultrasonic welding seat 81 and a first ultrasonic welding head 82 provided by some embodiments of the present application; FIG. 10 is a schematic structural diagram of an overlapping area Z1 of a tab portion 22 of an electrode assembly 2 before welding, a first ultrasonic welding seat 81 and a first ultrasonic welding head 82 provided by some embodiments of the present application; FIG. 11 is a schematic structural diagram of an electrode assembly 2 provided by some embodiments of the present application, in which, the overlapping area Z1 of the tab portion 22 forms the first welding portion 2211 by ultrasonic welding. The first welding portion 2211 is formed in an ultrasonic welding manner.

Specifically, after being paired, the plurality of tab sheets 221 are laminated, and the laminated tab sheets 221 have the overlapping area Z1 and the offset area Z2; the overlapping area Z1 is clamped between the first ultrasonic welding seat 81 and the first ultrasonic welding head 82; and any two adjacent tab sheets 221 generate friction to be melted, so that the tab sheets 221 are welded together at the part of the overlapping area Z1 to form the first welding portion 2211.

In the above technical solution, the first welding portion 2211 is formed in the ultrasonic welding manner, so that the welding speed and the welding efficiency can be improved, and the surface quality of the overlapping area Z1 after welding is improved; the welding process is clean, stable and reliable; and the energy consumption is low.

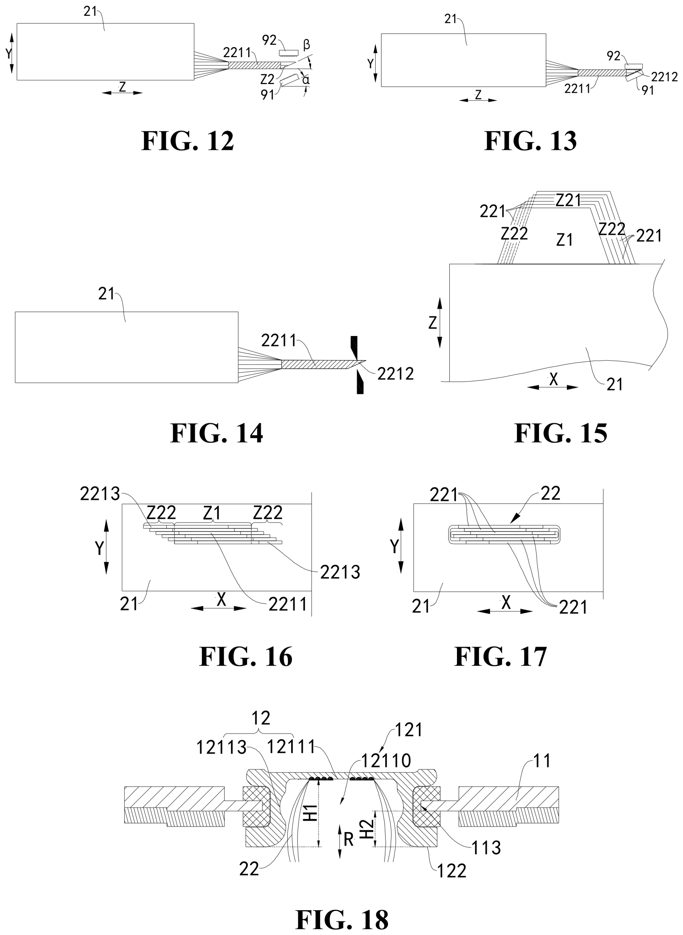

With reference to FIG. 12 to FIG. 14, FIG. 12 is a schematic structural diagram of an offset area Z2 of a tab portion 22 of an electrode assembly 2 before welding, a second ultrasonic welding seat 91 and a second ultrasonic welding head 92 provided by some embodiments of the present application; FIG. 13 is a schematic structural diagram of an electrode assembly 2 provided by some embodiments of the present application, in which, the offset area Z2, far away from the active material coating portion 21, of the tab portion 22 forms the second welding portion 2212 by ultrasonic welding; and FIG. 14 is a schematic structural diagram of an electrode assembly 2 provided by some embodiments of the present application. The second welding portion 2212 is formed in the ultrasonic welding manner.

Specifically, a position, far away from the active material coating portion 21, of the offset area Z2 is clamped between the second ultrasonic welding seat 91 and the second ultrasonic welding head 92, and any two adjacent tab sheets 221 generate friction to be melted, so that the plurality of tab sheets 221 are welded together at the position, far away from the active material coating portion 21, of the offset area Z2 to form the second welding portion 2212.

In the above technical solution, the second welding portion 2212 is formed in the ultrasonic welding manner, so that the welding speed and the welding efficiency can be improved, and the surface quality of the overlapping area Z1 after welding is improved; the welding process is clean, stable and reliable; and the energy consumption is low.

In some other embodiments, the offset area Z2 formed after the plurality of tab sheets 221 are laminated includes an end offset area Z21 which is positioned at one end, far away from the active material coating portion 21, of the overlapping area Z1; and a first portion of the end offset area Z21 is, in a direction approaching the active material coating portion 21, bent towards a remaining second portion in the end offset area Z21, and then is laminated and connected to form the second welding portion 2212.

Specifically, the end part offset area Z21 of the laminated multi-layer tab sheet 221 will cause adverse effects on subsequent assembling of the tab portion 22 and laser welding of the tab portion 22 and the terminal post 12, so that in the related technology, in the production process of the electrode assembly 2, it is needed to cut off the whole end part offset area Z21 of the multi-layer tab sheet 221 by a cutter, and only the overlapping area Z1 without offset is reserved in the multi-layer tab sheet 221; the multi-layer tab sheet 221 in the only remaining overlapping area Z1 is subjected to ultrasonic pre-welding to form the tab portion 22 after cutting; and then laser welding is carried out on the tab portion 22 and the terminal post 12. However, in the process of cutting the tab sheet 221, in order to improve the cutting quality, it is needed to adjust the position of the cutter in real time; and when relative positions of the plurality of tab portions 22 on the electrode assemblies 2 with different specifications are different, it is also needed to adjust the position of the cutter for simultaneously cutting the plurality of tab portions 22 on the electrode assemblies 2 with different specifications, consequently, the processing efficiency is relatively low, the length of the cut tab portion 22 is shortened, the area of a weld mark formed after welding with the terminal post 12 is relatively small, the overcurrent capability is reduced, the charging and discharging efficiency of the battery cell 10 is affected, and moreover, there is the problem of material waste of the tab sheet 221.

In the embodiment of the present application, the end offset area Z21 of the multi-layer tab sheets 221 is bent, laminated and connected to realize the reuse of the end offset area Z21, which relieves the adverse effects of the end offset areas Z21 of the multi-layer tab sheets 221 on the subsequent assembling of the tab portion 22 (for example, the tab portion 22 penetrate a penetrating hole in the terminal post 12) and the subsequent welding of the tab portion 22 and the terminal post 12 or an adapter sheet. Moreover, compared with a mode of cutting off the whole end offset area Z21, this mode is to increase an ultrasonic pre-welding area of the tab portion 22, which increases an electric connection area of the tab portion 22 and the terminal post 12, thereby improving the overcurrent capacity, as well as improving the charging and discharging efficiency of the battery cell 10. Moreover, it is not needed to cut the end offset area Z21 of the tab portion 22 by the cutter, so the time for adjusting the cutter in the cutting process is saved; and a procedure is not needed to be introduced for adjusting the cutter for synchronously cutting the plurality of tab portion 22 of the electrode assembly 2, which is conducive to accelerating the production takt of the electrode assembly 2, and improves the production efficiency of the electrode assembly 2. In addition, the end offset area Z21 of the multi-layer tab sheets 221 is reused, so the material waste is reduced, and the material utilization rate of the tab portion 22 is improved.

With reference to FIG. 15 and FIG. 16, FIG. 15 is a local amplification diagram of an electrode assembly 2 provided by some other embodiments of the present application; and FIG. 16 is a top view of an electrode assembly 2 provided by some other embodiments of the present application. In yet some other embodiments, the offset area Z2 is welded on at least one of the two sides of the overlapping area Z1 to form a third welding portion 2213. Specifically, the offset area Z2 formed after the plurality of tab sheets 221 are laminated includes two side offset areas Z22 which are positioned on two sides of the overlapping area Z1 in the width direction, and at least one side offset area Z22 is welded to form the third welding portion 2213.

In the above technical solution, the offset area Z2 is welded on at least one of the two sides of the overlapping area Z1 to form the third welding portion 2213, so that on one hand, the area of the welding areas of the plurality of tab sheets 221 can be increased, the utilization rate of tab portion 22 is improved, the capacity of the battery cell 10 is improved and the overcurrent temperature rise is reduced; and on the other hand, the problem of the welding defect caused by press-fitting the welding pressure nozzle into loose areas of the plurality of tab sheets 221 in the related technology is reduced, and the tab portion 22 can conveniently penetrate the penetrating hole in the terminal post 12.

With reference to FIG. 17, FIG. 17 is a schematic diagram of a cross section of a tab portion 22 of an electrode assembly 2 provided by yet some other embodiments of the present application. In still yet some other embodiments, a first portion of the at least one side offset area Z22 is, in a direction approaching the active material coating portion 21, bent towards a remaining second portion of the side offset area Z22 and then is laminated and connected by welding to form the third welding portion 2213.

Specifically, the side offset area Z22 of the laminated multi-layer tab sheets 221 have adverse effects on the subsequent assembling of the tab portion 22 and the laser welding of the tab portion 22 and the terminal post 12, so that in the related technology, in the production process of the electrode assembly 2, it is needed to cut off the whole side offset area Z22 of the multi-layer tab sheets 221, and only the overlapping area Z1 without offset is reserved in the multi-layer tab sheets 221; the multi-layer tab sheets 221 in the only remaining overlapping area Z1 are subjected to ultrasonic pre-welding to form the tab portion 22 after cutting; and then laser welding is performed on the tab portion 22 and the terminal post 12. However, in the process of cutting the tab sheet 221, in order to improve the cutting quality, it is needed to adjust the position of the cutter in real time; and when relative positions of the plurality of tab portions 22 on the electrode assemblies 2 with different specifications are different, it is also needed to adjust the position of the cutter for simultaneously cutting the plurality of tab portions 22 on the electrode assemblies 2 with different specifications, consequently, the processing efficiency is relatively low, the length of the cut tab portion 22 is shortened, the area of a weld mark formed after welding with the terminal post 12 is relatively small, the overcurrent capability is reduced, the charging and discharging efficiency of the battery cell 10 is affected, and moreover, there is the problem of material waste of the tab sheet 221.

In the embodiment of the present application, the side offset area Z22 of the multi-layer tab sheets 221 is bent, laminated and connected to realize the reuse of the side offset area Z22, which relieves the adverse effects of the side offset areas Z22 of the multi-layer tab sheets 221 on the subsequent assembling of the tab portion 22 (for example, the tab portion 22 penetrate the penetrating hole in the terminal post 12) and the subsequent welding of the tab portion 22 and the terminal post 12 or the adapter sheet. Moreover, compared with a mode of cutting off the whole side offset area Z22, this mode is to increase the ultrasonic pre-welding area of the tab portion 22, which increases an electric connection area of the tab portion 22 and the terminal post 12, thereby improving the overcurrent capacity, as well as improving the charging and discharging efficiency of the battery cell 10. Moreover, it is not needed to cut the side offset area Z22 of the tab portion 22 by the cutter, so the time for adjusting the cutter in the cutting process is saved; and a procedure is not needed to be introduced for adjusting the cutter for synchronously cutting the plurality of tab portions 22 of the electrode assembly 2, which is conducive to accelerating the production takt of the electrode assembly 2, and improves the production efficiency of the electrode assembly 2. In addition, the side offset area Z22 of the multi-layer tab sheets 221 is reused, so the material waste is reduced, and the material utilization rate of the tab portion 22 is improved.

In conclusion, the reuse of the offset area Z2 of the multi-layer tab sheets 221 is realized by the laminating and connecting after bending, the adverse effects of the offset area Z2 of the multi-layer tab sheets 221 on the subsequent process are solved; and moreover, the electric connection area of the tab portion 22 and the terminal post 12 is increased, the overcurrent capacity is improved, the process and time for adjusting the position of the cutter in real time are saved, the processing efficiency of the electrode assembly 2 is improved, the requirements of production takt of a highspeed mass production line are met, the waste of materials is reduced, and the material utilization rate of the tab sheets 221 is improved.

With reference to FIG. 3 and FIG. 4, according to some embodiments of the present application, the present application provides a battery cell 10. The battery cell 10 includes a case 11 and an electrode assembly 2; the case 11 is provided with a terminal post 12; the electrode assembly 2 is arranged in the case 11; the tab portion 22 is connected to the terminal post 12; and the electrode assembly 2 is the electrode assembly 2 in any embodiment above.

In the technical solution provided by the embodiment of the present application, by adopting the electrode assembly 2, on one hand, the utilization rate of the tab portion 22 is improved, the capacity of the battery cell 10 is improved, and the overcurrent temperature rise is reduced; on the other hand, when the tab portion 22 is welded with the terminal post 12, the second welding portion 2212 can play a role in supporting the welding pressure nozzle in comparison with the plurality of loose tab sheets, the problems of wrinkles and the like are avoided, the problem of the welding defect caused by press-fitting the welding pressure nozzle into loose areas of the plurality of tab sheets 221 in the related technology is reduced, the use reliability of the battery cell 10 is improved, the cutting requirement of the welded tab portion 22 is reduced and the cost is reduced, and therefore, the production difficulty of the battery cell 10 is reduced, the cost is saved, and moreover, the quick charging performance of the battery cell 10 is improved.

With reference to FIG. 12 and FIG. 13, FIG. 12 is a local sectional schematic diagram of a battery cell 10 provided by some embodiments of the present application. FIG. 13 is a local sectional schematic diagram of a battery cell 10 provided by some embodiments of the present application. The terminal post 12 is provided with an accommodating portion 121, at least part of the tab portion 22 extends into and is accommodated in the accommodating portion 121, and the tab portion 22 is electrically connected to the terminal post 12. That is, the terminal post 12 is arranged to be of a hollow structure.

The at least part refers to that the tab portion 22 can be completely accommodated in the accommodating portion 121, or part of the tab portion 22 can be accommodated in the accommodating portion 121. The terminal post 12 is provided with the accommodating portion 121, and the hollow structure of the accommodating portion 121 can reduce the weight of the terminal post 12 to a certain extent so as to improve the weight energy density of the battery cell 10 and the battery 100 on the one hand, and on the other hand, the tab portion 22 can be accommodated in the accommodating portion 121, so that the assembling efficiency of the tab portion 22 is improved, the space occupied by the tab portion 22 can be saved, the space of the battery cell 10 is fully utilized, the support 3 and the terminal post 12 as well as the support 3 and the tab portion 22 can be cooperated tighter and more reliable, the structure of the battery cell 10 is more compact, and the energy density of the battery cell 10 is improved more favorably.

More specifically, part of or the whole tab portion 22 is accommodated in the accommodating portion 121, thus the part, positioned in the accommodating portion 121, of the tab portion 22 can occupy the space in the terminal post 12, and the space occupied by the tab portion 22 in the case 11 can be reduced; and when the size of the case 11 is fixed, some space in the case 11 can be saved so as to accommodate the active material coating portion 21 with a larger size and improve the volume energy density of the battery cell 10. For example, when the tab portion 22 is led out from the side, close to the terminal post 12, of the active material coating portion 21, the space occupied by the tab portion 22 between the active material coating portion 21 and the terminal post 12 can be saved, the size of the active material coating portion 21 in a leading-out direction of the tab portion 22 can be increased, a spacing between the active material coating portion 21 and the terminal post 12 is reduced, and the energy density of the battery cell 10 is improved.

Moreover, at least part of the tab portion 22 is accommodated in the accommodating portion 121, therefore, the space occupied by the battery cell 10 can be reduced, the battery 100 with the same volume can accommodate more battery cells 10, and the volume energy density of the battery 100 can be improved; and in addition, at least part of the tab portion 22 is accommodated in the accommodating portion 121 to occupy the space in the terminal post 12, so that the redundancy of the tab portion 22 in the case 11 can be reduced to a certain extent, the probability of short circuit between the tab portion 22 and the active material coating portion 21 is reduced, the probability of short circuit of the battery cell 10 is reduced, and the working reliability and stability of the battery cell 10 and the battery 100 are improved.

It is to be noted that in the embodiments of the present application, the accommodating portion 121 can be located on the side, facing the active material coating portion 21, of the terminal post 12 or on the side, deviating from the active material coating portion 21, of the terminal post 12.

Exemplarily, with reference to FIG. 12 and FIG. 13, when the accommodating portion 121 is located on the side, facing the active material coating portion 21, of the terminal post 12, the accommodating portion 121 includes a first accommodating groove 12110; a surface, facing the active material coating portion 21, of the terminal post 12 is a terminal post inner end surface 122; an opening of the first accommodating groove 12110 is formed in the terminal post inner end surface 122; and at least part of the end wall of the tab portion 22 is accommodated in the first accommodating groove 12110.

Exemplarily, the first accommodating groove 12110 is a groove body which is of a groove-shaped structure having a certain depth. For example, when the terminal post 12 is arranged on an upper end wall of the case 11, and the terminal post inner end surface 122 is a lower surface of the terminal post 12, the first accommodating groove 12110 is formed to be an accommodating groove with the opening being downwards and the groove wall being concave upwards. For another example, when the terminal post 12 is arranged on a lower end wall of the case 11 and the terminal post inner end surface 122 is an upper surface of the terminal post 12, the first accommodating groove 12110 is formed to be an accommodating groove with the opening being upwards and the groove wall being concave downwards.

In the above technical solution, on one hand, the first accommodating groove 12110 is formed in the terminal post 12, which can reduce the weight of the terminal post 12 to a certain extent, thereby improving the weight energy density of the battery cell 10 and the battery 100; on the other hand, the opening of the first accommodating groove 12110 is formed in the terminal post inner end surface 122, and the terminal post inner end surface 122 is the surface, close to one side of the active material coating portion 21, of the terminal post 12, thus the first accommodating groove 12110 can be opened towards the active material coating portion 21, then the tab portion 22 can conveniently extend into the first accommodating groove 12110, thereby improving the assembling efficiency. Moreover, the first accommodating groove 12110 in this form is convenient to process, so that the production efficiency is improved.

Moreover, the first accommodating groove 12110 is conveniently processed into a relatively large capacity for accommodating more tab portions 22; moreover, the first accommodating groove 12110 is opened towards the active material coating portion 21, and the first accommodating groove 12110 can also be used as a buffer and temporary storage structure of an electrolyte solution, thus more electrolyte solutions can be accommodated in the case 11; the electrolyte solution will be consumed in the charging and discharging processes of the battery cell 10, so the service life of the battery cell 10 can be prolonged when more electrolyte solutions are provided; and the first accommodating groove 12110 is opened towards the active material coating portion 21, the first accommodating groove 12110 can also be used as an accommodating and buffer structure for gas produced in the electrode assembly 2, thereby reducing the expansion of the battery cell 10, and improving the reliability and the stability of the battery cell 10.

In addition, the first accommodating groove 12110 is located on the inner side of the terminal post 12, and external foreign matters are not easy to enter the first accommodating groove 12110, therefore, the influence of the external foreign matters on the electrode assembly 2 can be reduced, the working stability and reliability of the electrode assembly 2 can be improved, and the stability and the reliability of the battery cell 10 and the battery 100 are further improved.

With reference to FIG. 12, in the embodiments of the present application, the connection mode of the terminal post 12 and the case 11 is not limited, for example, the connection mode can be welding or riveting. For example, when the terminal post 12 and the case 11 are matched in the riveting mode, the case 11 is provided with a mounting hole 113, and the terminal post 12 is riveted at the mounting hole 113. Definitely, it is to be understood that when the terminal post 12 and the case 11 are matched in the welding mode or other mode, the case 11 can also be provided with the mounting hole 113, thus facilitating to mount the terminal post 12 on the case 11 through the mounting hole 113, which is not limited herein.

Moreover, the first accommodating groove 12110 can be arranged corresponding to the position of the mounting hole 113, or, on a projection plane perpendicular to an axial direction R of the terminal post 12, an orthographic projection of the first accommodating groove 12110 is in an orthographic projection range of the mounting hole 113, so that the first accommodating groove 12110 may have a large depth to accommodate more tab portions 22, and then the space occupied by the tab portions 22 in the case 11 can be reduced to a greater extent. Specifically, when the case 11 is provided with the mounting hole 113 and the terminal post 12 is mounted in the mounting hole 113, a depth H1 of the first accommodating groove 12110 is greater than or equal to a minimum distance H2 from the terminal post inner end face 122 to the mounting hole 113 along an axial direction R of the terminal post 12.

It is to be noted that the specific shape of the first accommodating groove 12110 is not limited, it can be in a regular shape or an irregular shape, such as a constant-section cylindrical groove with a rectangular, elliptical or runway-shaped cross section, a trapezoidal groove with a rectangular cross section and a gradually-changed cross section size, a hemispherical groove with a circular cross section and a gradually-changed cross section size, a hemispherical groove with an elliptical cross section and a gradually-changed cross section size, and the like. Therefore, the depth H1 of the first accommodating groove 12110 refers to the maximum depth of the first accommodating groove 12110 along the axial direction R of the terminal post 12.

Because in the axial direction R of the terminal post 12, the depth H1 of the first accommodating groove 12110 is greater than or equal to the minimum distance H2 from the terminal post inner end surface 122 to the mounting hole 113, the capacity of the terminal post 12 can be fully utilized, the first accommodating groove 12110 can have a relatively large depth, thus more tab portions 22 can be accommodated, the space occupied by the tab portions 22 in the case 11 can be reduced to a greater extent, furthermore, the energy density of the battery cell 10 is improved, and the redundancy of the tab portions 22 in the case 11 is reduced; moreover, the first accommodating groove 12110 has a relatively large depth, so that gas produced by the electrode assembly 2 can be accommodated, and the reliability and stability of the battery cell 10 are improved; and more electrolyte solutions can be accommodated, which prolongs the service life of the battery cell 10.

With reference to FIG. 12 and FIG. 13, in order to improve the stability and reliability of electric connection between the active material coating portion 21 and the terminal post 12, in some embodiments of the present application, an electric connection position of the tab portion 22 and the terminal post 12 can be located on the groove wall of the first accommodating groove 12110 formed by an accommodating portion 121.

Exemplarily, the tab portion 22 and the terminal post 12 can be electrically connected by welding, and the electric connection position is a welding position of the tab portion 22 and the terminal post 12. Moreover, the welding mode of the tab portion 22 and the terminal post 12 is not limited, for example, it can be laser welding, or vertical welding or inclined sealing and welding can be selected according to factors such as the positions, angles or structures of the welding portion, and it can also be overlap welding, edge sealing or welding and the like. In other embodiments of the present application, the tab portion 22 and the terminal post 12 can be electrically connected by replacing welding with other modes, for example, conductive glue or conductive nails are arranged. In order to simplify the description, that the tab portion 22 and the terminal post 12 are welded to realize electric connection, and the welding position is the electric connection position of the tab portion 22 and the terminal post 12 will be taken as an example for illustration.

Specifically, the terminal post 12 specifically includes a first end wall 12111 and a first side wall 12113; the first end wall 12111 is located on the side, far away from the active material coating portion 21, of the first side wall; a first accommodating groove 12110 is defined by the first end wall 12111 and the first side wall 12113; and the electric connection position of the tab portion 22 and the terminal post 12 is located on the first end wall 12111 and/or the first side wall 12113. That is, the tab portion 22 can be welded with at least one of the first end wall 12111 and the first side wall 12113.

In the above technical solution, the electric connection position of the tab portion 22 and the terminal post 12 is arranged on at least one of the first end wall 12111 and the first side wall 12113, so that the first accommodating groove 12110 has the effect of accommodating at least one part of the tab portion 22, and the groove wall of the first accommodating groove 12110 also has the effect of realizing electric connection with the tab portion 22; the structure of the terminal post 12 can be simplified, and the processing of the terminal post 12 is facilitated; and moreover, the structure of the tab portion 22 can be simplified, the redundancy of the tab portion 22 is reduced, and the cost of the tab portion 22 is reduced. The electric connection with the tab portion 22 is achieved by the groove wall of the first accommodating groove 12110, which makes an electric connection area of the tab portion 22 and the terminal post 12 relatively large, thereby reducing the electric connection difficulty, improving the reliability and the stability of electric connection, and further improving the performance of the battery cell 10.

In addition, the electric connection position of the tab portion 22 and the terminal post 12 is located in the first accommodating groove 12110, thus that the electric connection position protrudes out of the terminal post 12 to occupy the space outside the terminal post 12 can be reduced, moreover, the electric connection position can be protected by the terminal post 12, and the reliability and the stability of electric connection of the tab portion 22 and the terminal post 12 are improved.

In addition, in the embodiments of the present application, the first end wall 12111 is of a closed structure without a penetrating hole 12130, so that the first accommodating groove 12110 is isolated from the external space of the case 11, which can reduce the problem that the electrolyte solution in the case 11 leaks from the first accommodating groove 12110.

With reference to FIG. 12 and FIG. 13, in some optional embodiments, the local shape of the tab portion 22 is matched with that of the first end wall 12111, and the tab portion 22 and the first end wall 12111 are arranged in a fitting manner and are electrically connected, so that the position in which the tab portion 22 is electrically connected to the first end wall 12111 extends along the length or width direction of the first end wall 12111. For example, when the first end wall 12111 is a plane, the local part of the tab portion 22 can also be a plane and fits the first end wall 12111, and the fitting position is electrically connected, such as welding. Therefore, the electric connection area can be increased, and the reliability and stability of electric connection are improved.

In addition, when the electric connection between the tab portion 22 and the first end wall 12111 is implemented by welding, the first end wall 12111 is positioned on the side, far away from the active material coating portion 21, of the first accommodating groove 12110, which facilitates the welding operation, for example, the welding can be performed from the side, far away from the active material coating portion 21, of the terminal post 12.

It is to be noted that the shape of the first end wall 12111 is not limited, for example, it can be in a flat-plate shape, an arc-plate shape and the like. When the first end wall 12111 is of a flat-plate structure, the first end wall 12111 is arranged with an included angle in an axial direction R of the terminal post 12, for example, it can be of the flat-plate structure perpendicular to the axial direction R of the terminal post 12, for another example, it can also be of an inclined flat-plate structure which is not perpendicular to the axial direction R of the terminal post 12, but the inclination direction is not limited.

Definitely, in other embodiments of the present application, the position in which the tab portion 22 is electrically connected to the first end wall 12111 may not extend along the length or width direction of the first end wall 12111, for example, the position can also be a plurality of discrete points, for example, the tab portion 22 is provided with a plurality of parts which are arranged at intervals and are respectively welded with the first end wall 12111, which will not be listed herein.

With reference to FIG. 14, FIG. 14 is a local sectional schematic diagram of a battery cell 10 provided by some embodiments of the present application. When the tab portion 22 is electrically connected to the first end wall 12111, a first sunken groove 12112 can be formed in the first end wall 12111, and a sinking direction of the first sunken groove 12112 is a direction deviating from the active material coating portion 21. At least one part of the electric connection position of the tab portion 22 and the first end wall 12111 is located in the first sunken groove 12112. Exemplarily, at least one part of the tab portion 22 can be arranged in the first sunken groove 12112 and is connected to a part, which is used for limiting the first sunken groove 12112, of the first end wall 12111. In the above technical solution, on one hand, the first sunken groove 12112 can be used for pre-positioning and limiting the electric connection position of the tab portion 22, so that the position is easy to find to realize the electric connection, and the production efficiency is improved; moreover, the stability and reliability of the tab portion 22 are easy to improve, and the stability and reliability of the charging and discharging process of the battery cell 10 are improved; and on the other hand, the first sunken groove 12112 is formed in the first end wall 12111, so that a local wall thickness of the first end wall 12111 can be partially reduced, which is conducive to welding, reducing the weight of the terminal post 12, and improving the weight energy density of the battery cell 10.

With reference to FIG. 13 and FIG. 14, in the embodiments of the present application, the terminal post 12 can also be provided with a first groove 126 according to requirements; the first groove 126 is located in one side, far away from the active material coating portion 21, of the terminal post 12, namely, the surface, far away from the active material coating portion 21, of the terminal post 12 is a terminal post outer end surface 123; and an opening of the first groove 126 is formed in the terminal post outer end surface 123.

It is to be understood that the first groove 126 is a groove body which is of a groove-shaped structure having a certain depth. Moreover, when the terminal post 12 is arranged on the upper end wall of the case 11 and the terminal post outer end surface 123 is the upper surface of the terminal post 12, the first groove 126 is formed to be a first groove 126 with the opening being upwards and the groove wall sunken downwards (namely squarely sunken towards the electrode assembly 2). For another example, when the terminal post 12 is arranged on the lower end wall of the case 11 and the terminal post outer end surface 123 is the lower surface of the terminal post 12, the first groove 126 is formed to be a first groove 126 with the opening being downwards and the groove wall sunken upwards (namely squarely sunken far away from the electrode assembly 2).

In the above technical solution, on one hand, the terminal post 12 is provided with the first groove 126, which can further reduce the weight of the terminal post 12, thereby improving the weight energy density of the battery cell 10 and the battery 100; on the other hand, the first groove 126 is located in the outer side of the terminal post 12, namely the side, deviating from the interior of the case 11, of the terminal post 12 is opened, and structural spare parts, electrically connected to all the battery cells 10, in the battery 100 can be accommodated or mounted through the first groove 126, thereby fully utilizing the space in the terminal post 12, and improving the space utilization rate and the volume energy density of the battery 100.

In addition, the terminal post 12 is provided with the first accommodating groove 12110 and the first groove 126 at the same time, the first groove 126 is located in the side, away from the active material coating portion 21, of the first accommodating groove 12110, and the first groove 126 is opened in the direction deviating from the first accommodating groove 12110, which is conducive to performing laser welding on the tab portion 22 and the first end wall 12111 through the first groove 126 from the outer side of the terminal post 12, namely the side, far away from the active material coating portion 21, of the terminal post 12, that is, facilitating the electric connection between the tab portion 22 and the terminal post 12 by external welding. That is, through this structural arrangement, external welding can be conveniently carried out on the terminal post 12 and the tab portion 22 through the first groove 126, which facilitating machining and manufacturing of the battery cell 10, and saves the machining and manufacturing cost.

Further, in order to conveniently and effectively weld the tab portion 22 and the groove wall of the first accommodating groove 12110 through the first groove 126 and improve the welding reliability of the tab portion 22 and the groove wall of the first accommodating groove 12110, in the embodiments of the present application, a part between the first groove 126 and the first accommodating groove 12110 can be welded with the tab portion 22 by laser, namely a spacing portion 127 shown in FIG. 14 is welded with the tab portion 22 by laser, thus realizing electric connection between the electrode assembly 2 and the terminal post 12. The spacing portion 127, located between the first groove 126 and the first accommodating groove 12110, of the terminal post 12 is relatively thin; the spacing portion 127 isolates the first groove 126 from the first accommodating groove 12110; the side wall surface, close to the active material coating portion 21, of the spacing portion 127 can be used as the first end wall 12111; and when it is needed to weld the tab portion 22 with the first end wall 12111, the thickness of the spacing portion 127 is relatively small, which is conducive to welding the tab portion 22 and the first end wall 12111 through the first groove 126, thereby improving the welding convenience and reliability.

With reference to FIG. 13, further, the battery cell 10 can also include a groove cover 7 which is arranged on the terminal post 12 and covers the opening of the first groove 126. In the above technical solution, by arranging the groove cover 7 that covers the first groove 126, the terminal post 12 can be indirectly electrically connected to a bus part through the groove cover 7; by arranging the position and structure of the groove cover 7, the electric connection between the groove cover 7 and the bus part is conveniently carried out, and the electric connection area is increased. Therefore, the groove cover 7 facilitates the electric connection of adjacent battery cells 10 in the battery 100; and moreover, the electric connection parts of the battery cells 10 are at the groove cover 7 and can be isolated from the electric connection position of the tab portion 22 and the terminal post 12, so that the mutual interference is reduced, and the stability and reliability of the battery cells 10 can be further improved.

Exemplarily, with reference to FIG. 15, FIG. 15 is a local sectional schematic diagram of a battery cell 10 provided by some embodiments of the present application; the accommodating portion 121 can also include a second accommodating groove 12120; the surface of the side, far away from the active material coating portion 21, of the terminal post 12 is a terminal post outer end surface 123; an opening of the second accommodating groove 12120 is formed in the terminal post outer end surface 123; the second accommodating groove 12120 is in communication with the interior of the case 11 through the penetrating hole 12130; and a tab portion 22 is arranged in the penetrating hole 12130 in a penetrating manner and is at least partially accommodated in the second accommodating groove 12120.

It is to be understood that the second accommodating groove 12120 is a groove body which is of a groove-shaped structure having a certain depth. For example, when the terminal post 12 is arranged on the upper end wall of the case 11 and the terminal post outer end surface 123 is the upper surface of the terminal post 12, the second accommodating groove 12120 is formed to be an accommodating groove with the opening being upwards and the groove wall sunken downwards. For another example, when the terminal post 12 is arranged on the lower end wall of the case 11 and the terminal post outer end surface 123 is the lower surface of the terminal post 12, the second accommodating groove 12120 is formed to be an accommodating groove with the opening being downwards and the groove wall sunken upwards.

In the above technical solution, with reference to FIG. 15, on one hand, the terminal post 12 is provided with the second accommodating groove 12120, which can reduce the weight of the terminal post 12 to a certain extent, thereby improving the weight energy density of the battery cell 10 and the battery 100; on the other hand, the opening of the second accommodating groove 12120 is formed in the terminal post outer end surface 123, and the terminal post outer end surface 123 is the surface of the side, far away from the active material coating portion 21, of the terminal post 12, so that the second accommodating groove 12120 can be opened towards the direction deviating from the active material coating portion 21, therefore, when at least part of the tab portion 22 is accommodated in the second accommodating groove 12120, the accommodating and arrangement of the tab portion 22 can be easily realized through the opening of the second accommodating groove 12120, and the electric connection operation and the like on the tab portion 22 and the terminal post 12 can be easily realized through the opening of the second accommodating groove 12120, furthermore, the production difficulty of the battery cell 10 can be reduced, and the production efficiency of the battery cell 10 can be improved.

Moreover, the second accommodating groove 12120 can be in communication with the interior of the case 11 through the penetrating hole 12130, so the second accommodating groove 12120 can also be used as the buffer and temporary storage structure of the electrolyte solution, and more electrolyte solutions can be accommodated in the case 11; the electrolyte solution will be consumed in the charging and discharging process of the battery cell 10, so the service life of the battery cell 10 can be prolonged when more electrolyte solutions are provided; and moreover, the second accommodating groove 12120 can be in communication with the interior of the case 11 through the penetrating hole 12130, so the second accommodating groove 12120 can also be used as the accommodating and buffer structure for gas produced in the electrode assembly 2, which reduces the expansion of the battery cell 10, and improves the reliability and the stability of the battery cell 10.

It is to be noted that when the accommodating portion 121 is provided with the second accommodating groove 12120 and the tab portion 22 penetrates through the penetrating hole 12130 and is at least partially accommodated in the second accommodating groove 12120, the electric connection position of the tab portion 22 and the terminal post 12 is not limited. Exemplarily, when the tab portion 22 penetrates through the penetrating hole 12130 and is at least partially accommodated in the second accommodating groove 12120, in the embodiments of the present application, the electric connection position of the tab portion 22 and the terminal post 12 is located on the hole wall of the penetrating hole 12130 formed by the terminal post 12.

In the above technical solution, the electric connection position of the tab portion 22 and the terminal post 12 is arranged on the hole wall of the penetrating hole 12130, which facilitates the electric connection operation on the tab portion 22 and the terminal post 12 through the second accommodating groove 12120; and when the electric connection area of the tab portion 22 and the terminal post 12 is relatively large, the tab portion 22 and the terminal post 12 can be electrically connected to seal the penetrating hole 12130, thereby saving the sealing cost, reducing the electrolyte solution leakage, and saving sealing parts.

Specifically, the tab portion 22 and the hole wall of the penetrating hole 12130 can be welded at a connection position of the penetrating hole 12130 and the second accommodating groove 12120, which facilitates the operation; and the weld mark is controlled, the penetrating hole 12130 can be sealed by the weld mark and the tab portion 22, therefore, the problem that the electrolyte solution leaks from the penetrating hole 12130 in the case 11 is relieved.

Exemplarily, when the tab portion 22 penetrates through the penetrating hole 12130 and is at least partially accommodated in the second accommodating groove 12120, in some other embodiments of the present application, the electric connection position of the tab portion 22 and the terminal post 12 can be located on the groove wall of the second accommodating groove 12120 formed by the terminal post 12. Therefore, it facilitates the electric connection operation, for example, when the tab portion 22 is welded with the groove wall of the second accommodating groove 12120 formed by the terminal post 12, the problem of short circuit caused by conductive particles that are generated by welding and enter the case 11 can be relieved.

With reference to FIG. 15, the terminal post 12 includes a second end wall 12121 and a second side wall 12123; the second end wall 12121 is located on the side, close to the active material coating portion 21, of the second side wall 12123; the second accommodating groove 12120 is defined by the second end wall 12121 and the second side wall 12123; the penetrating hole 12130 is formed in the second end wall 12121; and the electric connection position of the tab portion 22 and the terminal post 12 is located on the second end wall 12121 and/or the second side wall 12123. More specifically, the tab portion 22 and the terminal post 12 can be electrically connected by welding, and therefore the welding position is the electric connection position of the tab portion 22 and the terminal post 12. In other embodiments of the present application, the tab portion 22 and the terminal post 12 can be electrically connected in other modes instead of welding, for example, conductive adhesives or conductive nails are arranged, which will not be listed herein.

In order to simplify the description, that the tab portion 22 and the terminal post 12 are welded to realize electric connection, and the welding position is the electric connection position of the tab portion 22 and the terminal post 12 will be taken as an example for illustration. For example, in some embodiments, the electric connection position of the tab portion 22 and the terminal post 12 is located on the second end wall 12121 and/or the second side wall 12123, namely, the tab portion 22 can be welded to at least one of the second end wall 12121 and the second side wall 12123.

In the above technical solution, the electric connection position of the tab portion 22 and the terminal post 12 is arranged on at least one of the second end wall 12121 and the second side wall 12123, so that the second accommodating groove 12120 has the effect of accommodating at least one part of the tab portion 22, and the groove wall of the second accommodating groove 12120 also has the effect of realizing electric connection with the tab portion 22; the structure of the terminal post 12 can be simplified, and the processing of the terminal post 12 is facilitated. The penetrating hole 12130 is formed in the second end wall 12121 so that the tab portion 22 can conveniently stretch into the second accommodating groove 12120 through the penetrating hole 12130, and moreover, the structure of the tab portion 22 can be simplified, the redundancy of the tab portion 22 is reduced, and the cost of the tab portion 22 is reduced. The opening of the second accommodating groove 12120 is opened so that the tab portion 22 and the groove wall of the second accommodating groove 12120 can be easily subjected to electric connection operation through the opening of the second accommodating groove 12120, and the difficulty of the electric connection can be reduced; the electric connection with the tab portion 22 is achieved by the groove wall of the second accommodating groove 12120, which makes an electric connection area of the tab portion 22 and the terminal post 12 relatively large, thereby improving the reliability and the stability of electric connection, and further improving the performance of the battery cell 10.

In addition, the electric connection position of the tab portion 22 and the terminal post 12 is located in the second accommodating groove 12120, thus that the electric connection position protrudes out of the terminal post 12 to occupy the space outside the terminal post 12 can be reduced, moreover, the electric connection position can be protected by the terminal post 12, and the reliability and the stability of electric connection of the tab portion 22 and the terminal post 12 are improved.

As shown in figure 15, in some embodiments, the local shape of the tab portion 22 is matched with that of the second end wall 12121, and the tab portion 22 and the second end wall 12121 are arranged in a fitting manner and are electrically connected, so that the position in which the tab portion 22 is electrically connected to the second end wall 12121 extends along the length or width direction of the second end wall 12121. For example, when the second end wall 12121 is a plane, the local part of the tab portion 22 can also be a plane and fits the second end wall 12121, and the fitting position is electrically connected, such as welding. Therefore, the electric connection area can be increased, and the reliability and stability of electric connection are improved.

It is to be noted that the shape of the second end wall 12121 is not limited, for example, it can be in a flat-plate shape, an arc-plate shape and the like. When the second end wall 12121 is of a flat-plate structure, the second end wall 12121 is arranged with an included angle in an axial direction R of the terminal post 12, for example, it can be of the flat-plate structure perpendicular to the axial direction R of the terminal post 12, for another example, it can also be of an inclined flat-plate structure which is not perpendicular to the axial direction R of the terminal post 12, but the inclination direction is not limited.

For example, with reference to FIG. 15, when the second end wall 12121 is of the flat-plate structure, the included angle θ between the second end wall 12121 and the axial direction R of the terminal post 12 is equal to 90°, namely, the second end wall 12121 is equally spaced from the active material coating portion 21 in the direction from the penetrating hole 12130 to the second side wall 12123. Therefore, it is conducive to welding the tab portion 22 and the second end wall 12121.

For another example, the included angle θ between the second end wall 12121 and the axial direction R of the terminal post 12 is greater than 90°, namely, the second end wall 12121 obliquely extends in the direction approaching the active material coating portion 21 along the direction from the penetrating hole 12130 to the second side wall 12123. Therefore, the extension distance of the tab portion 22 along the second end wall 12121 can be increased, so that the reliability of electric connection is improved. Exemplarily, the included angle θ between the second end wall 12121 and the axial direction R of the terminal post 12 can be 90°-145°, such as 100°, 110°, 120°, 130°, 140°, so that on one hand, the second end wall 12121 can be easily processed and is conveniently electrically connected to the tab portion 22, and on the other hand, the space in the terminal post 12 can be utilized more fully to accommodate the tab portion 22.

For another example, the included angle θ between the second end wall 12121 and the axial direction R of the terminal post 12 is less than 90°, that is, the second end wall 12121 extends obliquely in a direction away from the active material coating portion 21 in the direction from the penetrating hole 12130 to the second side wall 12123.

Therefore, the extension distance of the tab portion 22 along the second end wall 12121 can be increased, so that the reliability of electric connection is improved. Exemplarily, the included angle θ between the second end wall 12121 and the axial direction R of the terminal post 12 can be 45°-90°, such as 50°, 60°, 70°, and 80°, so that on the one hand, the second end wall 12121 is easily processed and is conveniently electrically connected to the tab portion 22, and on the other hand, the space in the terminal post 12 can be utilized more fully to accommodate the tab portion 22.

Definitely, the present application is not limited to this, in other embodiments of the present application, the position in which the tab portion 22 is electrically connected to the second end wall 12121 may not extend along the length or width direction of the second end wall 12121, for example, the position can also be a plurality of discrete points, for example, the tab portion 22 is provided with a plurality of parts which are arranged at intervals and are respectively welded with the second end wall 12121, which will not be listed herein.

With reference to FIG. 15 and FIG. 16, FIG. 16 is a local sectional schematic diagram of a battery cell 10 provided by some embodiments of the present application. No matter what the included angle θ between the second end wall 12121 and the axial direction R of the terminal post 12 is, in the embodiments of the present application, when the tab portion 22 is electrically connected to the second end wall 12121, a second sunken groove 12122 can be formed in the second end wall 12121 according to the requirement, and the second sunken groove 12122 is a groove formed by sinking a part of the second end wall 12121 to the end close to the active material coating portion 21. The position in which the tab portion 22 is electrically connected to the second end wall 12121 is at least partially positioned in the second sunken groove 12122.

In the above technical solution, the part, positioned in the second sunken groove 12122, of the tab portion 22 is matched with the second sunken groove 12122 in shape and is subjected to fitting arrangement to realize electric connection; the electric connection position of the tab portion 22 can be pre-positioned and limited by the second sunken groove 12122, so that the position is easy to find to realize the electric connection, the production efficiency is improved, and the stability and reliability of the electric connection position are improved, thereby improving the reliability and stability of charging and discharging operations of the battery cell 10.

With reference to FIG. 16, in the embodiments of the present application, the connection mode of the terminal post 12 and the case 11 is not limited, for example, the connection mode can be welding or riveting; and for example, when the terminal post 12 and the case 11 are matched in the riveting mode, the case 11 is provided with the mounting hole 113, and the terminal post 12 is riveted at the mounting hole 113. Definitely, it is to be understood that when the terminal post 12 and the case 11 are matched in the welding mode or other mode, the case 11 can also be provided with the mounting hole 113, and the terminal post 12 is arranged at the mounting hole 113.

Optionally, with reference to FIG. 15, the second accommodating groove 12120 can be arranged corresponding to the position of the mounting hole 113, or, on the projection plane perpendicular to the axial direction R of the terminal post 12, the orthographic projection of the second accommodating groove 12120 is within the orthographic projection range of the mounting hole 113, so that the second accommodating groove 12120 can have a larger depth to accommodate more tab portions 22, and the space occupied by the tab portions 22 in the case 11 can be further reduced to a greater extent.

In some embodiments, with reference to FIG. 15, when the case 11 is provided with the mounting hole 113 and the terminal post 12 is arranged in the mounting hole 113, a depth H3 of the second accommodating groove 12120 is greater than or equal to a minimum distance H4 from the terminal post outer end surface 123 to the mounting hole 113 along the axial direction R of the terminal post 12.

It is to be noted that the specific shape of the second accommodating groove 12120 is not limited, it can be in a regular shape or an irregular shape, such as a constant-section cylindrical groove with a rectangular, elliptical or runway-shaped cross section, a trapezoidal groove with a rectangular cross section and a gradually-changed cross section size, a hemispherical groove with a circular cross section and a gradually-changed cross section size, a hemispherical groove with an elliptical cross section and a gradually-changed cross section size, and the like. It is to be noted that a runway shape described herein refers to a rectangular shape that the two short edges are replaced by convex curves.

Therefore, the depth H3 of the second accommodating groove 12120 refers to: the maximum depth of the second accommodating groove 12120 along the axial direction R of the terminal post 12. Because in the axial direction R of the terminal post 12, the depth H3 of the second accommodating groove 12120 is greater than or equal to the minimum distance H4 from the terminal post outer end surface 123 to the mounting hole 113, the capacity of the terminal post 12 can be fully utilized, the second accommodating groove 12120 can have a relatively large depth, thus more tab portions 22 can be accommodated, the space occupied by the tab portions 22 in the case 11 can be reduced to a greater extent, furthermore, the energy density of the battery cell 10 is improved, and the redundancy of the tab portions 22 in the case 11 is reduced; moreover, the second accommodating groove 12120 has a relatively large depth, so that gas produced by the electrode assembly 2 can be accommodated, and the reliability and stability of the battery cell 10 are improved; and more electrolyte solutions can be accommodated, which prolongs the service life of the battery cell 10.

With reference to FIG. 16 and FIG. 17, FIG. 17 is a local sectional schematic diagram of a battery cell 10 provided by some embodiments of the present application. In the embodiments of the present application, when the accommodating portion 121 is provided with the second accommodating groove 12120 in any embodiment above, optionally, the battery cell 10 can further include a cover plate 13 which is matched with the terminal post 12 and seals the opening of the second accommodating groove 12120, and the cover plate 13 is electrically connected to the terminal post 12.

In the above technical solution, the opening of the second accommodating groove 12120 is sealed by the cover plate 13, thus the electrolyte solution in the case 11 can be prevented from leaking from the opening of the second accommodating groove 12120; and the cover plate 13 seals the opening of the second accommodating groove 12120 and is electrically connected to the terminal post 12, so that indirect electric connection between the terminal post 12 and the bus part can be easily realized by the cover plate 13, and moreover, the connection area at the electric connection is increased, thereby reducing the resistance of the electric connection.

It is to be noted that the matching mode and the matching position of the cover plate 13 and the terminal post 12 are not limited as long as the cover plate 13 can be sealed relative to the opening of the second accommodating groove 12120. For example, in some embodiments, the cover plate 13 can be welded with the terminal post 12; and during processing, the tab portion 22 can penetrate through the penetrating hole 12130 and is welded on the groove wall of the second accommodating groove 12120, and then the cover plate 13 is welded with the terminal post 12 to seal the opening of the second accommodating groove 12120.

It is also to be noted that the specific structure of the cover plate 13 is not limited. For example, in some optional embodiments, with reference to FIG. 17, the cover plate 13 includes a first conductive member 131 and a second conductive member 132 which are made of different materials; the first conductive member 131 is matched and electrically connected to the terminal post 12; and the second conductive member 132 is matched and electrically connected to the first conductive member 131.

In the above technical solution, the cover plate 13 is set to be in a composite form, and the first conductive member 131 is set to be made of the same material as the terminal post 12, which facilitates electric connection between the first conductive member 131 and the terminal post 12 conveniently, for example, the first conductive member 131 can be reliably and stably connected to the terminal post 12 easily by welding. In addition, the second conductive member 132 is made of the different material as the first conductive member 131, so that the second conductive member 132 can be electrically connected to the bus part and the like which are made of the different material as the terminal post 12 conveniently, for example, the second conductive member 132 can be reliably and stably connected to the bus part which is made of the same material as the second conductive member 132 easily by welding.

For example, when the terminal post 12 is a negative electrode terminal post 12, the terminal post 12 is a copper post, and the bus part is an aluminum sheet, at the moment, the first conductive member 131 can be set be made of copper material, the second conductive member 132 can be set to be made of aluminum material, the terminal post 12 and the first conductive member 131 are made of the same material and can be effectively welded, and the second conductive member 132 and the confluence part are made of the same material and can be effectively welded, and therefore, indirect electric connection between the terminal post 12 and the confluence part through the cover plate 13 can be effectively realized. Moreover, the terminal post 12 and the first conductive member 131 are subjected to welding by copper materials, the fluidity is good, cracks are not easy to generate, and the sealing effect of the welding position is improved.

With reference to FIG. 17, in some optional examples, the first conductive member 131 is located between the second accommodating groove 12120 and the second conductive member 132. In the above technical solution, the first conductive member 131 is located between the second accommodating groove 12120 and the second conductive member 132, so that the second accommodating groove 12120 and the second conductive member 132 can be isolated; and when the electrolyte solution in the case 11 enters the second accommodating groove 12120 through the penetrating hole 12130, the first conductive member 131 can be used for preventing the part of the electrolyte solution from being in contact with the second conductive member 132, and the problem that the electrolyte solution corrodes the second conductive member 132 is solved.

It is to be noted that the matching mode of the first conductive member 131 and the second conductive member 132 is not limited. For example, in some embodiments, with reference to FIG. 17, the first conductive member 131 is provided with the second groove 1311, the second conductive member 132 is embedded in the second groove 1311, and the opening of the second groove 1311 is formed in the surface of the side, away from the second accommodating groove 12120, of the first conductive member 131, so that the second conductive member 132 is exposed from the opening of the second groove 1311. Or, in some other embodiments, the connection mode of the first conductive member 131 and the second conductive member 132 can be fastening connection, clamping connection and the like.

It is also to be noted that the "exposure" of the second conductive member 132 exposing from the opening of the second groove 1311 refers to that: the first conductive member 131 does not shield the second conductive member 132 at the position of the opening of the second groove 1311, and the second conductive member 132 is not required to protrude from the opening of the second groove 1311, for example, the second conductive member 132 may be flush with the surface of the side, far away from the second accommodating groove 12120, of the first conductive member 131, or the second conductive member 132 may protrude from the surface of the side, far away from the second accommodating groove 12120, of the first conductive member 131.

In the above technical solution, on one hand, the second conductive member 132 is embedded in the first conductive member 131, thus the assembling difficulty of the first conductive member 131 and the second conductive member 132 can be reduced, the stability and convenience of the cooperation of the first conductive member 131 and the second conductive member 132 are improved, the thickness of the cover plate 13 can be reduced, and the space occupied by the cover plate 13 is reduced, thereby improving the space utilization rate of the battery cell 10. On the other hand, since the second conductive member 132 can be exposed from the surface of the side, far away from the second accommodating groove 12120, of the first conductive member 131 through the opening of the second groove 1311, the electric connection between the second conductive member 132 and the bus part outside the terminal post 12 is achieved.

In addition, since the opening of the second groove 1311 is formed on the surface of the side, far away from the second accommodating groove 12120, of the first conductive member 131, which indicates that the second groove 1311 is opened in the direction deviating from the active material coating portion 21, so that the part, which is used for limiting the groove wall of the second groove 1311, of the first conductive member 131 is located between the second accommodating groove 12120 and the second conductive member 132 to isolate the second accommodating groove 12120 from the second conductive member 132, thereby preventing the electrolyte solution in the second groove 1311 from contacting the second conductive member 132, and reducing the leakage of the electrolyte solution.

Definitely, in some other embodiments, the cover plate 13 can also be not in a composite form composed of various materials, for example, in some other embodiments of the present application, the cover plate 13 can also be integrally set to be in a non-composite form processed by the same material, for example, the cover plate 13 fits a positive electrode terminal post 12, which will not be listed here.

With reference to FIG. 17, the cover plate 13 is further embedded in the opening of the second accommodating groove 12120. In the above technical solution, the cover plate 13 is embedded in the second accommodating groove 12120, so that the assembling difficulty of the cover plate 13 and the terminal post 12 can be reduced, the assembling stability of the cover plate 13 and the terminal post 12 as well as the reliability and convenience of connection are improved, and the space occupied by the cover plate 13 outside the terminal post 12 can be reduced. Moreover, the cover plate 13 is embedded in the opening of the second accommodating groove 12120, so that the second accommodating groove 12120 can have a relatively sufficient space for accommodating the tab portion 22.

Definitely, in some other embodiments of the present application, the matching mode of the cover plate 13 and the terminal post 12 is not limited to be embedded in the second accommodating groove 12120, and the cover plate 13 can also directly cover the terminal post 12, namely directly cover the opening of the second accommodating groove 12120, which is conducive to matching with the bus part of the battery 100, and it is not limited in the embodiments.

In some embodiments, the case 11 includes a case cover 112 and a case body 111; the case body 111 is provided with an opening 1110; the case cover 112 covers the opening 1110; and the terminal post 12 is arranged on the case cover 112 and/or a wall body, opposite to the opening 1110, of the case body 111.

Exemplarily, all the terminal posts 12 can be arranged on the case cover 112. Exemplarily, one terminal post 12 can be arranged on the case cover 112, and the rest terminal posts 12 can be arranged on the case body 111. Because the size of the case cover 112 is relatively small, the size of a mold or a clamp can be reduced, which is conducive to reducing the cost.

Definitely, at least one terminal post 12 can also be arranged on a wall body, opposite to the opening 1110, of the case body 111. In this manner, the electrode assembly 2 enters the case body 111 along the opening 1110, and the tab portion 22 is directly opposite to the terminal post 12, so that the tab portion 22 can be relatively easily connected to the terminal post 12, and the assembling efficiency of the battery cell 10 is improved.

With reference to FIG. 2, according to some embodiments of the present application, the present application also provides a battery 100. The battery 100 includes the battery cell 10 in any solution above.

In the technical solution provided by the embodiment of the present application, by adopting the battery cell 10, the capacity of the battery 100 is improved, the use reliability of the battery 100 is improved, and the production difficulty is reduced.

With reference to FIG. 1, according to some embodiments of the present application, the present application also provides an electrical apparatus 1000. The electrical apparatus 1000 includes the battery cell 10 in any solution above, or, includes the battery 100 in above solution, and the battery 100 is used for providing electric energy for the electrical apparatus 1000. The electrical apparatus 1000 can be the above device or system using the battery 100.

In the technical solution provided by the embodiment of the present application, by adopting the battery 100, the use reliability of the electrical apparatus 1000 can be improved.

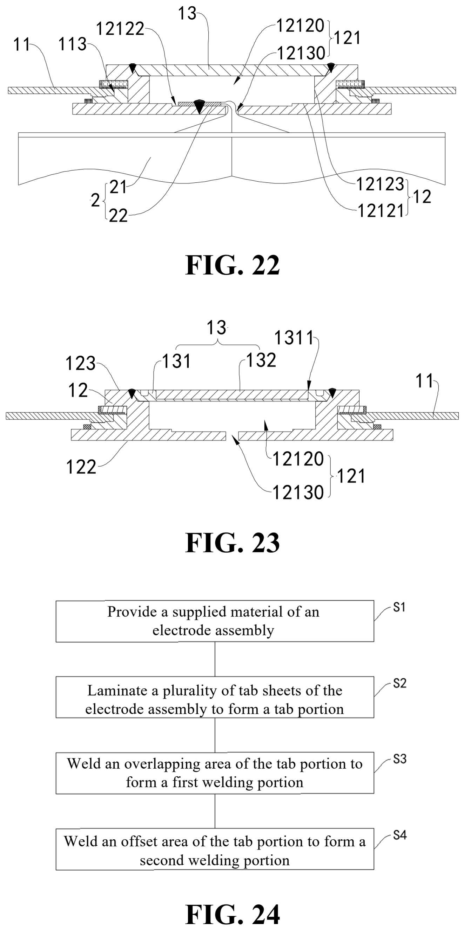

With reference to FIG. 8 to FIG. 14 and FIG. 24, FIG. 24 is a preparation flowchart of an electrode assembly 2 provided by some embodiments of the present application; and the present application provides a preparation method for an electrode assembly 2. The preparation method for the electrode assembly includes the following steps:
providing a supplied material of the electrode assembly;
laminating a plurality of tab sheets of the electrode assembly;
welding an overlapping area of the plurality of tab sheets to form a first welding portion of a tab portion; and
welding an offset area of the plurality of tab sheets to form a second welding portion of the tab portion, the second welding portion being located at the end, far away from an active material coating portion, of the first welding portion.

Specifically, the preparation method can include the following steps: welding the overlapping area Z1 to form the first welding portion 2211, and then welding a part, far away from the active material coating portion 21, of the offset area Z2 to form the second welding portion 2212; or welding the part, far away from the active material coating portion 21, of the offset area Z2 to form the second welding portion 2212, and then welding the overlapping area Z1 to form the first welding portion 2211.

In the technical solution provided by the embodiment of the present application, the overlapping area Z1 of a plurality of tab sheets 221 is welded to form the first welding portion 2211, and the offset area Z2 of the plurality of tab sheets 221 is welded at a position far away from the active material coating portion 21 to form the second welding portion 2212, so that the area of the welding area of the plurality of tab sheets 221 can be increased; on one hand, the utilization rate of the tab portion 22 is improved, the capacity of the battery cell 10 is improved, and overcurrent temperature rise is reduced; on the other hand, when the tab portion 22 is welded with the terminal post 12, the second welding portion 2212 can play a role in supporting a welding pressure nozzle in comparison with the plurality of loose tab sheets, the problem of the welding defect caused by press-fitting the welding pressure nozzle into loose areas of the plurality of tab sheets 221 in the related technology is reduced, the cutting requirement of the welded tab portion 22 is reduced and the cost is reduced; and moreover, the quick charging performance of the battery cell 10 is improved.

With reference to FIG. 8 to FIG. 11, the welding the overlapping area Z1 of the plurality of tab sheets 221 includes: clamping the overlapping area Z1 of the plurality of tab sheets 221 between a first ultrasonic welding seat 81 and a first ultrasonic welding head 82, and welding the overlapping area Z1 of the tab portion 22 in an ultrasonic welding manner to form the first welding portion 2211 of the tab portion.

Specifically, after being paired, the plurality of tab sheets 221 are laminated, and the laminated tab sheets 221 have the overlapping area Z1 and the offset area Z2; the overlapping area Z1 is clamped between the first ultrasonic welding seat 81 and the first ultrasonic welding head 82; and any two adjacent tab sheets 221 generate friction to be melted, so that the tab sheets 221 are welded together at the part of the overlapping area Z1 to form the first welding portion 2211.

In the above technical solution, the first welding portion 2211 is formed in the ultrasonic welding manner, so that the welding speed and the welding efficiency can be improved, and the surface quality of the overlapping area Z1 after welding is improved; the welding process is clean, stable and reliable; and the energy consumption is low.

With reference to FIG. 12 to FIG. 14, the welding the offset area Z2 of the plurality of tab sheets 221 includes: clamping the offset area Z2 of the plurality of tab sheets 221 between a second ultrasonic welding seat 91 and a second ultrasonic welding head 92, and welding the offset area Z2 of the tab sheets 221 in the ultrasonic welding manner to form the second welding portion 2212 of the tab portion 22.

Specifically, a position, far away from the active material coating portion 21, of the offset area Z2 is clamped between the second ultrasonic welding seat 91 and the second ultrasonic welding head 92, and any two adjacent tab sheets 221 generate friction to be melted, so that the plurality of tab sheets 221 are welded together at the position, far away from the active material coating portion 21, of the offset area Z2 to form the second welding portion 2212.

In the above technical solution, the second welding portion 2212 is formed in the ultrasonic welding manner, so that the welding speed and the welding efficiency can be improved, and the surface quality of the overlapping area Z1 after welding is improved; the welding process is clean, stable and reliable; and the energy consumption is low.

With reference to FIG. 12 to FIG. 14, one of the surfaces, facing each other, of the second ultrasonic welding seat 91 and the second ultrasonic welding head 92 extends along the height of the tab portion 22, and the other one is obliquely arranged relative to the height direction of the tab portion 22.

That is, the first surface 2214 of the second welding portion 2212 formed after welding can be flush with the first welding portion 2211; when the tab portion 22 is welded to the terminal post 12, a large welding pressure nozzle can be adopted, a part of the welding pressure nozzle can be pressed on the first welding portion 2211 and the other part of the welding pressure nozzle can be pressed on the second welding portion 2212, namely, the first welding portion 2211 and the second welding portion 2212 can support the welding pressure nozzle at the same time, therefore, the welding difficulty can be reduced, the problem of the welding defect caused by press-fitting the welding pressure nozzle into loose areas of the plurality of tab sheets in the related technology is reduced, the cutting requirement on the tab portion after welding is reduced, the cost is reduced, and meanwhile, the quick charging performance of the battery cell 10 is improved.

In the above technical solution, the offset area Z2 can be subjected to ultrasonic welding by the second ultrasonic welding seat 91 and the second ultrasonic welding head 92 to form the preset second welding portion 2212, on one hand, it is conducive to determining whether to cut subsequently according to the requirements and facilitates the cutting; and on the other hand, the welding difficulty can be reduced, the welding defects are reduced and the welding quality is improved.

In some embodiments, the included angle α between surfaces, facing each other, of the second ultrasonic welding seat 91 and the second ultrasonic welding head 92 is smaller than the included angle β between two oppositely arranged wall surfaces of the offset area Z2. Through this arrangement, the second ultrasonic welding seat 91 and the second ultrasonic welding head 92 can clamp a part, far away from the active material coating portion 21, of the offset area Z2, so that the welding quality can be improved.

Specifically, after the overlapping area Z1 is welded to form the first welding portion 2211, the second ultrasonic welding seat 91 and the second ultrasonic welding head 92 can be configured to weld the part, far away from the active material coating portion 21, of the offset area Z2 together to form the second welding portion 2212; then the second welding portion 2212 is optionally cut according to requirements; and then welding slag on a section can be removed with a hairbrush or in a vacuum dust collection manner and the like.

In some other embodiments, the offset area Z2 formed after the plurality of tab sheets 221 are laminated includes an end offset area Z21 which is positioned at the end, far away from the active material coating portion 21, of the overlapping area Z1; and before welding the end offset area Z21 by the second ultrasonic welding seat 91 and the second ultrasonic welding head 92, the method further includes: bending, in a direction approaching the active material coating portion 21, the first portion of the end offset area Z21 towards a remaining second portion in the end offset area Z21, and then laminating and welding and connecting same to form the second welding portion 2212.

In the above technical solution, the offset area Z2 is welded on at least one of the two sides of the overlapping area Z1 to form the third welding portion 2213, so that on one hand, the area of the welding areas of the plurality of tab sheets 221 can be increased, the utilization rate of tab portion 22 is improved, the capacity of the battery cell 10 is improved and the overcurrent temperature rise is reduced; and on the other hand, the problem of the welding defect caused by press-fitting the welding pressure nozzle into loose areas of the plurality of tab sheets 221 in the related technology is reduced, and the tab portion 22 can conveniently penetrate the penetrating hole in the terminal post 12.

In some embodiments, the preparation method for the electrode assembly 2 further includes: welding the offset area Z2 of the plurality of tab sheets 221 to form the third welding portion 2213 of the tab portion 22, the third welding portion 2213 being located on at least one of two sides of the first welding portion 2211.

Specifically, the offset area Z2 formed after the plurality of tab sheets 221 are laminated includes two side offset areas Z22 which are positioned on two sides of the overlapping area Z1 in the width direction, and at least one side offset area Z22 is welded to form the third welding portion 2213.

In the above technical solution, the offset area Z2 is welded on at least one of the two sides of the overlapping area Z1 to form the third welding portion 2213, so that on one hand, the area of the welding areas of the plurality of tab sheets 221 can be increased, the utilization rate of tab portion 22 is improved, the capacity of the battery cell 10 is improved and the overcurrent temperature rise is reduced; and on the other hand, the problem of the welding defect caused by press-fitting the welding pressure nozzle into loose areas of the plurality of tab sheets 221 in the related technology is reduced, and the tab portion 22 can conveniently penetrate the penetrating hole in the terminal post 12.

With reference to FIG. 17, in yet some other embodiments, before welding to form the third welding portion 2213, the method also includes: bending, in a direction approaching the active material coating portion 21, the first portion of the at least one side offset area Z22 towards a remaining second portion in the end offset area Z22, and then laminating and welding and connecting same to form the third welding portion 2213.

Finally, it is to be noted that the above embodiments are only used for illustrating the technical solutions of the present application, not to limit them, and although the present application is described in detail with reference to the foregoing embodiments, those of ordinary skill in the art should understand that it may still modify the technical solutions described in the foregoing embodiments, or replace some or all of the technical features therein, and these modifications or substitutions do not make the essence of the corresponding technical solutions out of the scope of the technical solutions of the embodiments of the present application, and they should be covered by the scope of the claims and description of the present application. In particular, the technical features mentioned in the various embodiments can be combined in any manner as long as there is no structural conflict. The present application is not limited to the particular Examples disclosed herein, but rather includes all technical solutions falling within the scope of the claims.

## Claims

1. An electrode assembly, comprising:
an active material coating portion; and
a tab portion which is connected to the active material coating portion and comprises a plurality of tab sheets which are arranged in a laminated manner, wherein the plurality of tab sheets are laminated to form an overlapping area and an offset area; the overlapping area is welded to form a first welding portion; and the offset area is at least welded at a position far away from the active material coating portion to form a second welding portion.

2. The electrode assembly according to claim 1, wherein the first welding portion and the second welding portion are arranged in a connection manner.

3. The electrode assembly according to claim 1, wherein
in a width direction of the tab portion, the ratio of a width of the first welding portion to a width of the second welding portion ranges from 0.8 to 1.2; and/or,
in the width direction of the tab portion, the ratio of the width of the first welding portion to the width of the tab portion ranges from 0.6 to 1;
in a height direction of the tab portion, the ratio of a height of the second welding portion to a height of the first welding portion ranges from 0.08 to 0.2; and/or,
in the height direction of the tab portion, the ratio of the height of the first welding portion to the height of the tab portion ranges from 0.45 to 0.65.

4. The electrode assembly according to any one of claims 1 to 3, wherein in the height direction of the tab portion, the height of the second welding portion is 1-2 mm.

5. The electrode assembly according to claim 1, wherein a thickness of the second welding portion gradually decreases along a direction far away from the first welding portion.

6. The electrode assembly according to claim 5, wherein the second welding portion is provided with a first surface and a second surface which are oppositely arranged; and at least one of the first surface and the second surface is obliquely arranged relative to the height direction of the tab portion.

7. The electrode assembly according to claim 6, wherein the maximum distance from the first surface to the second surface is 0.5-1 mm.

8. The electrode assembly according to claim 6 or 7, wherein the first surface extends along the height direction of the tab portion; the second surface is obliquely arranged relative to the height direction of the tab portion; and the distance from the first surface to the second surface gradually decreases along the direction far away from the first welding portion.

9. The electrode assembly according to claim 8, wherein an included angle between the first surface and the second surface is 10°-45°.

10. The electrode assembly according to any one of claims 1 to 9, wherein the first welding portion and the second welding portion are formed in an ultrasonic welding manner.

11. The electrode assembly according to any one of claims 1 to 10, wherein the offset area is welded on at least one of two sides of the overlapping area to form a third welding portion.

12. A battery cell, comprising:
a case which is provided with a terminal post; and
an electrode assembly which is arranged in the case, wherein the tab portion is connected to the terminal post; and the electrode assembly is the electrode assembly according to any one of claims 1 to 11.

13. The battery cell according to claim 12, wherein the terminal post is provided with an accommodating portion, and at least part of the tab portion extends into the accommodating portion to be connected to the terminal post in a welding manner.

14. The battery cell according to claim 13, wherein the accommodating portion comprises a first accommodating groove; a surface of the side, facing the active material coating portion, of the terminal post is a terminal post inner end surface; an opening of the first accommodating groove is formed in the terminal post inner end surface; and at least part of the tab portion is accommodated in the first accommodating groove.

15. The battery cell according to claim 13, wherein the accommodating portion comprises a second accommodating groove; a surface of the side, far away from the active material coating portion, of the terminal post is a terminal post outer end surface; an opening of the second accommodating groove is formed in the terminal post outer end surface; the second accommodating groove is in communication with the interior of the case through a penetrating hole; and the tab portion is arranged in the penetrating hole in a penetrating manner and is at least partially accommodated in the second accommodating groove.

16. The battery cell according to any one of claims 12 to 15, wherein the case comprises a case cover and a case body with an opening; the case cover covers the opening; and the terminal post is arranged on the case cover and/or a wall body, opposite to the opening, of the case body.

17. A battery, comprising the battery cell according to any one of claims 12 to 16.

18. An electrical apparatus, comprising the battery according to claim 17.

19. A preparation method for an electrode assembly, comprising the following steps:
providing a supplied material of the electrode assembly;
laminating a plurality of tab sheets of the electrode assembly to form a tab portion;
welding an overlapping area of the tab portion to form a first welding portion; and
welding an offset area of the tab portion to form a second welding portion, the second welding portion being located at an end, far away from an active material coating portion, of the first welding portion.

20. The preparation method for an electrode assembly according to claim 19, wherein the welding the overlapping area of the tab portion comprises:
clamping the overlapping area of the tab portion between a first ultrasonic welding seat and a first ultrasonic welding head, and welding the overlapping area of tab portion in an ultrasonic welding manner to form the first welding portion.

21. The preparation method for an electrode assembly according to claim 19 or 20, wherein the welding the offset area of the tab portion comprises:
clamping the offset area of the tab portion between a second ultrasonic welding seat and a second ultrasonic welding head, and welding the offset area of the tab portion in an ultrasonic welding manner to form the second welding portion.

22. The preparation method for an electrode assembly according to claim 21, wherein one of the surfaces, facing each other, of the second ultrasonic welding seat and the second ultrasonic welding head extends along the height of the tab portion, and the other one is obliquely arranged relative to the height direction of the tab portion.

23. The preparation method for an electrode assembly according to claim 21 or 22, wherein an included angle between the surfaces, facing each other, of the second ultrasonic welding seat and the second ultrasonic welding head is smaller than an included angle between two oppositely arranged wall surfaces of the offset area.
